# EUROPÄISCHE PATENTSCHRIFT

(11) **EP 2 408 846 B1**
(45) Veröffentlichungstag und Bekanntmachung des Hinweises auf die Patenterteilung: **16.01.2013**
(21) Anmeldenummer: 10709209.0
(22) Anmeldetag: 16.03.2010
(51) Int. Cl.: C08G 77/54, C08L 83/14

(54) **HYBRIDPOLYMERE AUS CYANATEN UND SILAZANEN, VERFAHREN ZU IHRER HERSTELLUNG SOWIE DEREN VERWENDUNG**
HYBRID POLYMERS MADE OF CYANATES AND SILAZANES, METHOD FOR THE PRODUCTION AND USE THEREOF
POLYMÈRES HYBRIDES DE CYANATES ET DE SILAZANES, LEUR PROCÉDÉ DE PRODUCTION ET LEUR UTILISATION

(30) Priorität: 16.03.2009 DE 102009013410
(43) Veröffentlichungstag der Anmeldung: 25.01.2012
(73) Patentinhaber: Fraunhofer-Gesellschaft zur Förderung der angewandten Forschung e.V., 80686 München (DE); Clariant Finance (BVI) Limited, Road Town, Tortola (VG)
(72) Erfinder: BAUER, Monika, 15712 Königs Wusterhausen (DE); DECKER, Daniel, 65835 Liederbach (DE); RICHTER, Frank, 65929 Frankfurt (DE); GWIAZDA, Maciej, 10829 Berlin (DE)
(74) Vertreter: Olgemöller, Luitgard Maria
(86) Internationale Anmeldenummer: PCT/EP2010/053405
(87) Internationale Veröffentlichungsnummer: WO 2010/106074

(56) Entgegenhaltungen:
- US-A- 4 929 704
- US-A- 5 229 468

## Beschreibung

Die vorliegende Erfindung betrifft Hybridprepolymere und -polymere, hergestellt durch Umsetzung von difunktionellen, oligofunktionellen und/oder polyfunktionellen Cyanaten und/oder von deren Prepolymeren mit monomeren, oligomeren und/oder polymeren Silazanen. Die Polymere sind Duromere mit hoher Glasübergangstemperatur und im Vergleich zu Duromeren aus den jeweiligen Cyanat-Ausgangsmaterialien sehr hoher Bruchzähigkeit. Sie lassen sich in prepolymerisiertem Zustand in Lösemitteln lösen und sind daher beispielsweise als Tränkharze für Prepregs geeignet. Außerdem lassen sie sich zu Formkörpern verarbeiten. Als besonders herausragend sind ihre Brandeigenschaften zu bezeichnen.

Für die Herstellung von Formteilen, z.B. aus Gießharzen, beschichteten Flächengebilden, Klebern, Haftvermittlern und anderem benötigt man in zunehmendem Maße leichte Kunststoffmaterialien, die brandhemmend sind bzw. wirken und die gleichzeitig mechanisch sehr stabil sein sollen. Zu den Anforderungen an das Brandverhaltens gehören dabei häufig eine geringe Wärmefreisetzungsrate, eine niedrige Rauchgasdichte, eine geringe Toxizität der gebildeten Brandgase, aber auch ein hoher Brandrückstand.

Für diese Zwecke setzt man häufig flüssige oder viskose Harze ein, die sich mit Hilfe von Wärme und/oder Druck nachvernetzen lassen. Wegen der oben genannten hohen Brandanforderungen kommen als Harze für solche Zwecke vorrangig Phenolharze in Frage. Phenolharze können jedoch die geforderten mechanischen Eigenschaften nicht bereitstellen; für Anwendungen, bei denen z.B. Schlagbelastungen auftreten, kann insbesondere ihre hohe Sprödigkeit problematisch sein.

Zudem bestehen bei der Herstellung von Harzen für verschiedene Anwendungen spezielle Anforderungen. Ein Beispiel ist das Klebrigkeitsverhalten (der sog. Tack, bzw. die Reaktivierbarkeit des Tack), das ggf. durch Modifikationen (Formulierung) des Harzes gewährleistet werden muss. Ein solches Klebrigkeitsverhalten wird z.B. für Klebstoffe, Prepregharze, Binder für Laminate oder Haftvermittler benötigt.

Um Harze zu formulieren, aus denen sich flammgeschützte, verstärkte, ausformbare Flächengebilde (Prepregs) oder Formkörper erzeugen lassen, greift die Fachwelt gerne auf Additionsharze zurück, u.a., weil bei deren Polymerisation keine kleinmolekularen Nebenprodukte anfallen, die zu Blasenbildung führen könnten. Additionsharze mit guten mechanischen Eigenschaften sind Epoxidharze und Cyanatharze. Die heute kommerziell verfügbaren Epoxidharze sind jedoch für manche Zwecke nicht ausreichend flammwidrig, weil sie eine erhöhte (unzulässige) Brandlast, speziell Rauchgasdichte aufweisen. Aus der Elektronik sind zwar halogenierte Epoxidharze mit hoher Flammwidrigkeit bekannt, der Einsatz von Halogenen führt jedoch im Brandfalle zur Entstehung von hochtoxischen und hochkorrosiven Gasen, weshalb ihre Verwendung meist nicht in Betracht kommt.

Cyanatharze weisen dagegen bereits durch ihren hohen Stickstoff-Anteil und die Netzwerkstruktur eine intrinsische Flammwidrigkeit auf. Sie kombinieren eine niedrige Wärmefreisetzungsrate mit einer geringen Rauchgasdichte und einem niedrigen Anteil toxischer Gase im Brandfall. Sie haben in der Regel hohe Glasübergangstemperaturen und niedrige Bruchzähigkeiten.

Mit dem Ausdruck "Silazane" werden allgemein Verbindungen bezeichnet, die die Gruppe R¹R²R³Si-N(R⁴)SiR⁵R⁶R⁷ enthalten. Ein sehr einfacher Vertreter dieser Gruppe ist das Disilazan, H₃Si-NH-SiH₃. Cyclische und lineare Silazane umfassen oder bestehen aus Struktureinheiten -Si(R¹R²)-N(R³)-. Ausgehend von den Grundstrukturen ist eine Vielzahl von Silazanen entwickelt worden, deren Substituenten am Silicium beispielsweise neben Wasserstoff Alkyl, Alkenyl oder Aryl und deren Substituenten am Stickstoff neben Wasserstoff Alkyl oder Aryl sein können. Es existieren oligomere und polymere Strukturen, auch unter Einbau zusätzlicher Gruppen wie Harnstoffgruppen, sowie verschiedene Ringe und Mehrfachringe.

Additionspolymere von Polysilazanen mit Isocyanaten, Isothiocyanaten, Ketenen, Thioketenen, Carbodiimiden und Schwefelkohlenstoff sind in US 4,929,704, US 5,001,090 und US 5,021,533 beschrieben. Die Produkte wurden daraufhin untersucht, ob sie sich als Ausgangsmaterial für Siliciumnitrid-haltige Keramiken eignen. In US 5,843,526 und US 6,165,551 sind Zusammensetzungen beschrieben, die durch die Umsetzung von Polyharnstoffsilazanen mit Borverbindungen hergestellt wurden. In US 6,534,184 B2 sind Polysilazan/Polysiloxan-Block-Copolymere beschrieben.

In jüngerer Zeit wurde die Umsetzung von spezifischen Polysilazanen mit Isocyanaten genauer untersucht. Mit aromatischen Isocyanaten ist sie bereits bei Raumtemperatur heftig - schnell und stark exotherm - während sie mit aliphatischen Isocyanaten moderater abläuft und unter Umständen sogar die Zufuhr milder Wärme benötigt, um vollständig abzulaufen. Die Isocyanatgruppe wird dabei zwischen die Si-N-Gruppe des Silazans eingeschoben, so dass man im Polymer Harnstoffgruppen findet. Die Umsetzung von Polysilazanen mit Monoisocyanaten verändert demnach den Polymerisationszustand des Produktes nicht und führt auch keine zusätzlichen reaktiven Gruppen in das Material ein.

Die Erfinder der vorliegenden Erfindung haben es sich zur Aufgabe gemacht, Polymere bereitzustellen, die ein gegenüber Polycyanaten nochmals verbessertes Brandverhalten, eine hohe Glasübergangstemperatur und eine vergleichsweise sehr hohe Bruchzähigkeit aufweisen. Die Polymere sollen sich einerseits über formbare/aufschmelzbare Prepolymere erzeugen lassen, die unter vergleichsweise milden Bedingungen in Substanz oder in Lösung erhältlich sind und sich beispielsweise für die Herstellung von Prepregs oder Formkörpern eignen, aus denen sich durch Nachhärten (unter Druck und/oder erhöhter Temperatur) Duromere bilden lassen. Andererseits sollen sich die Polymere auch einstufig herstellen lassen, beispielsweise durch das Durchhärten von Gießharzen, die durch das Vermischen der Ausgangskomponenten erhalten wurden.

Diese Anforderungen entsprechen dem Profil der sogenannten RTM-Harze, die sich bei moderaten Temperaturen in einen Zustand überführen lassen, der noch flüssig ist und sich deshalb für Infusionsverfahren eignet, d.h. für Verfahren, bei denen eine Pre-Form (die z.B. ein stabilisierendes Geweben enthalten kann) mit dem relativ dünnflüssigen Harz getränkt wird. Derzeit werden vor allem Epoxid- und Bismaleimidharze als RTM-Harze eingesetzt, die jedoch allesamt eine nicht zufriedenstellende Flammfestigkeit aufweisen. Auch wäre es wünschenswert, die Nachvernetzungstemperaturen (derzeit ca. 200°C) weiter zu senken.

Überraschend konnten die Erfinder feststellen, dass sich diese Aufgabe durch die Bereitstellung von Hybrid-Prepolymeren und -Duromeren aus Cyanaten und Silazanen lösen lässt.

Isocyanate werden wie oben erwähnt unter Ausbildung von Harnstoffgruppen in die Si-N-Bindung von Silazanen eingeschoben. Dafür verantwortlich ist die Tatsache, dass der Stickstoff in der Isocyanatgruppe eine negative und der Kohlenstoff eine positive Partialladung trägt, so dass ein Einschub unter Ausbildung einer Bindung des Stickstoffs zum Silicium und einer Bindung des Kohlenstoffs zum Stickstoff erfolgt, wobei die N=C-Bindung in der Isocyanatgruppe in eine Einfachbindung umgewandelt wird. Für die Umsetzung von Silazanen mit Cyanaten würde der Fachmann bei vergleichbaren Mechanismen eine Spaltung in zwei Moleküle erwarten, denn bei einem Einschub der Cyanatgruppe mit negativer Partialladung am Sauerstoff und positiver Partialladung am Kohlenstoff in die Si-N-Bindung des Silazans würde die O-C-Einfachbindung des Cyanats gespalten werden müssen.

Überraschenderweise lassen sich dennoch aus der Kombination von Silazanen mit Cyanaten polymerisierbare Harze erhalten. Die Erfinder haben anhand einiger Modellversuche mit Arylcyanaten festgestellt, dass hier in einem ersten Schritt Nitrilgruppen auf den Stickstoff der Silazangruppen übertragen wurden. Der dabei gebildete Arylalkohol spaltet in einem zweiten Schritt eine Si-N-Bindung eines weiteren Silazans oder des gebildeten nitrilsubstituierten Silazans, und es bildete sich u.a. ein Cyanamid. Über weitere, nitrilendgruppenhaltige Zwischenprodukte bilden sich schließlich Triazinstrukturen, die je nach Anteil an Silazan mit -0-R- und/oder -NH-R-Gruppen substituiert sind. Aufgrund der Di- bzw. Polyfunktionalität der eingesetzten Cyanate bildet sich in den erfindungsgemäßen Hybrid-Prepolymeren daher über diese Gruppen ein Netzwerk aus. Die polymerisierbaren Harze bilden sich insbesondere dann, wenn ein Überschuss an Cyanat relativ zu Silazan eingesetzt wird, wie weiter unten näher erläutert.

Die erfindungsgemäßen Hybrid-Prepolymere lassen sich zu Duromeren mit verbesserten Eigenschaften aushärten. Im Vergleich zu reinen Cyanaten konnte insbesondere eine verbesserte Bruchzähigkeit festgestellt werden. Auch sind die Härtungstemperaturen bei der Duromerherstellung gegenüber reinen Cyanaten sowie gegenüber anderen Cyanatpolymeren wie z.B. Epoxid-Cyanaten niedriger; die Exothermie der Reaktion ist geringer, was die Reaktionsführung erleichtert. Schließlich konnte eine deutlich verbesserte Brandfestigkeit dokumentiert werden. Diese ist auch der Brandfestigkeit von Isocyanat-Silazan-Copolymeren überlegen, und zwar selbst dann, wenn die Duromere nur relativ wenig Silazan enthalten, das ja aufgrund seines hohen Stickstoffgehalts intrinsisch brandfester ist.

Die Hybridpolymere sind erhältlich durch Umsetzung eines oder mehrerer difunktioneller, oligofunktioneller oder polyfunktioneller Cyanate oder von Mischungen davon und/oder von deren Prepolymeren mit einem oder mehreren monomeren, oligomeren oder polymeren Silazanen oder von Mischungen davon und ggf. zusätzlich einer oder mehreren weiteren Komponenten. Dabei können entweder Mischungen der Ausgangskomponenten eingesetzt werden, oder die Umsetzung erfolgt in einem Lösungsmittel, in dem sich beide Komponenten lösen lassen. In einer ersten Stufe entstehen dabei Prepolymere, die löslich und/oder wieder aufschmelzbar sind und sich unter der Einwirkung höherer Temperaturen aushärten lassen, wobei Duromere entstehen. Alternativ werden die Ausgangsmaterialien vermischt, in die gewünschte Form gebracht und einstufig durchgehärtet.

Unter "oligofunktionellen Cyanaten" sollen erfindungsgemäß Cyanate mit 3 bis 10 Cyanatgruppen verstanden werden. Polyfunktionelle Cyanate sind demnach solche mit mindestens 11 Cyanatgruppen.

Unter "oligomeren Silazanen" sollen erfindungsgemäß Silazane mit 2 bis 10 Siliziumatomen verstanden werden. Polymere Silazane sind demnach solche mit mindestens 11 Siliziumatomen.

Die einsetzbaren Silazane oder Oligo-/Polysilazane besitzen die allgemeine Formel (I) 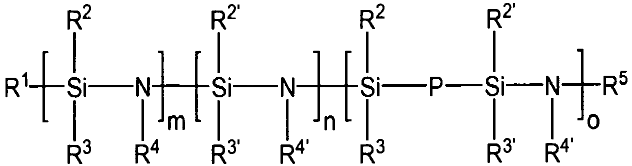 oder die allgemeine Formel (II) 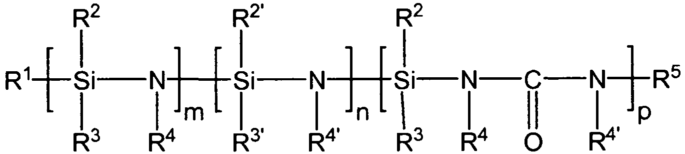 oder die allgemeine Formel (III) 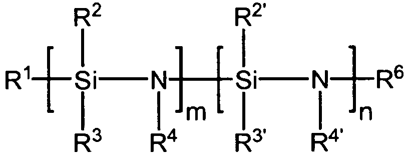 worin
(a) R² und R³ gleich oder verschieden sind und Wasserstoff oder geradkettiges, verzweigtes oder cyclisches, substituiertes oder - bevorzugt - unsubstituiertes Alkyl, Alkenyl, Aryl, Arylalkyl, Alkylaryl, Alkenylaryl oder Arylalkenyl bedeuten, wobei jeder der Substituenten R² und R³ im Falle von m und/oder o größer 1 in verschiedenen Einheiten eine unterschiedliche Bedeutung haben kann, vorzugsweise aber dieselbe Bedeutung besitzt, R^{2'} und R^{3'} gleich oder verschieden sind und geradkettiges, verzweigtes oder cyclisches, substituiertes oder - bevorzugt - unsubstituiertes Alkyl, Alkenyl, Aryl, Arylalkyl, Alkylaryl, Alkenylaryl oder Arylalkenyl bedeuten, wobei jeder der Substituenten R^{2'} und R^{3'} im Falle von n und/oder o größer 1 in verschiedenen Einheiten eine unterschiedliche Bedeutung haben kann, vorzugsweise aber dieselbe Bedeutung besitzt,
   oder
(b) R² und R^{2'} die voranstehend angegebene Bedeutung besitzen und - bei Anwesenheit mindestens eines Restes R³ und mindestens eines Restes R^{3'} - alle oder jeweils ein Teil der Reste R³ und R^{3'} zusammen eine unsubstituierte oder substituierte, geradkettige oder verzweigte Alkylengruppe mit vorzugsweise 2 verbrückenden Kohlenstoffatomen darstellen können, wobei ggf. der restliche Teil der Reste R³ und R^{3'} die unter (a) angegebene Bedeutung besitzt,
   und worin
   R⁴ und R^{4'} Alkyl mit vorzugsweise 1 bis 4 Kohlenstoffatomen, Phenyl oder - bevorzugt - Wasserstoff bedeuten, wobei mehrere Reste R⁴ und/oder R^{4'} in einem Silazan-Molekül gleich oder verschieden sein können,
   R¹ und R⁵ gleich oder verschieden sind und die gleiche Bedeutung wie R² bzw. R³ haben können, wobei R⁵ darüber hinaus auch Si(R¹)(R^{2'})(R³) bedeuten kann, oder R¹ und R⁵ zusammen eine Einfachbindung darstellen,
   R⁶ Si(R²)(R^{2'})-X-R⁷-Si(R²)_{q}(OR^{2'})_{3-q} bedeutet, worin X entweder O oder NR⁴ bedeutet, R⁷ eine Einfachbindung oder eine substituierte oder - bevorzugt - unsubstituierte, geradkettige, verzweigte oder cyclische Alkylengruppe darstellt und q 0, 1, 2 oder 3 sein kann,
   P eine Alkylengruppe mit 1 bis 12 Kohlenstoffatomen, vorzugsweise Ethylen ist,
   m und p unabhängig voneinander 1, 2, 3, 4, 5, 6, 7, 8, 9, 10 oder eine ganze Zahl zwischen 11 und 25000, vorzugsweise zwischen 11 und 200 bedeuten und n und o unabhängig voneinander 0, 1, 2, 3, 4, 5, 6, 7, 8, 9, 10 oder eine ganze Zahl zwischen 11 und 25000, vorzugsweise zwischen 11 und 200 bedeuten,
   wobei die in eckige Klammern gesetzten Einheiten vorzugsweise randomisiert, in anderen Fällen stattdessen blockweise und ggf. alternativ gleichmäßig im jeweiligen Molekül verteilt sein können.

Der Ausdruck "Einheiten" im Zusammenhang der Definition der Silazane mit den Formeln (I) bis (III) bezieht sich auf die jeweils in eine eckige Klammer gesetzten und mit einem die Menge dieser Einheiten im Molekül angebenden Index (m, n ...) versehenen Molekülteile.

In einer ersten bevorzugten Ausführungsform sind in den Formeln (I) bis (III) die an jeweils einem Siliziumatom gebundenen Substituenten (R² und R³ bzw. R^{2'} und R^{3'}) wie folgt ausgewählt: ein Alkylrest in Kombination mit einem Wasserstoffatom, einem weiteren Alkylrest, einem Alkenylrest, vorzugsweise einem Vinylrest, oder einem Phenylrest.

In einer davon unabhängigen zweiten bevorzugten Ausführungsform weisen die Alkyl-oder Alkenylreste in den Formeln (I) bis (III) 1 bis 6 Kohlenstoffatome auf. Methyl-, Ethyl- und Vinylreste sind besonders bevorzugt. Vorzugsweise weisen die Aryl-, Arylalkyl-, Alkylaryl-, Alkenylaryl- oder Arylalkenylreste 5 bis 12 Kohlenstoffatome auf. Phenyl- und Styrylreste sind besonders bevorzugt. Diese Ausführungsform ist in Kombination mit der ersten Ausführungsform besonders bevorzugt.

In einer weiteren, davon unabhängigen bevorzugten Ausführungsform der Formeln (I) bis (III) sind R⁴ und/oder R^{4'} ausgewählt unter Wasserstoff und Methyl.

In einer davon unabhängigen vierten bevorzugten Ausführungsform sind R², R³, R^{2'} und R^{3'} vorzugsweise ausgewählt unter Alkyl, insbesondere mit 1 bis 8 Kohlenstoffatomen.

In einer davon unabhängigen fünften Ausführungsform tragen die Substituenten R², R³, R^{2'} und R^{3'} Fluoratome. Diese Ausführungsform ist in Kombination mit der vierten Ausführungsform besonders bevorzugt.

In einer weiteren unabhängigen bevorzugten Ausführungsform der Formel (I) ist der Index o gleich 0.

In einer weiteren unabhängigen bevorzugten Ausführungsform der Formeln (I) oder (II) ist der Index m jeweils gleich 0.

In einer weiteren unabhängigen bevorzugten Ausführungsform bilden R¹ und R⁵ zusammen eine Einfachbindung. Diese Ausführungsform ist besonders bevorzugt für Verbindungen mit der Formel (I), worin der Index o Null ist und ggf. auch der Index m null ist.

In einer weiteren unabhängigen bevorzugten Ausführungsform ist o gleich 0 und sind m und n größer 1 und liegen vorzugsweise zwischen 2 und 25000, insbesondere zwischen 2 und 200. Dabei können m und n gleich oder verschieden sein. Zusätzlich oder alternativ können die m und n Einheiten randomisiert oder gleichmäßig verteilt vorliegen. Dabei können sie blockweise oder nicht blockweise angeordnet sein.

In einer davon unabhängigen weiteren bevorzugten Ausführungsform haben n und o in der Formel (I) die Bedeutung null und hat R⁵ die Bedeutung Si(R¹)(R^{2'})(R^{3'}). Beispiele für diese Ausführungsform (hier mit m = 1) sind:

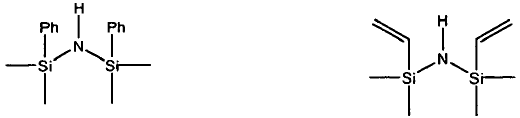

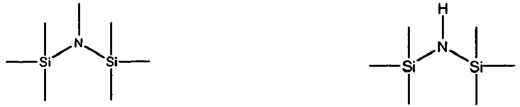

Die Einzelbindungsstriche in diesen Beispielen können insbesondere für Alkyl, ganz besonders bevorzugt für Methyl stehen, sie können aber auch für Hydrid oder teilweise für Alkyl und teilweise für Hydrid stehen.

In einer weiteren unabhängigen bevorzugten Ausführungsform hat m in der Formel (I) die Bedeutung 1, 2, 3, 4, 5 oder eine ganze Zahl zwischen 6 und 50, während n und o null sind, oder es handelt sich um eine Mischung verschiedener dieser Silazane. Dabei können die Substituenten R¹ und R⁵ gleich oder verschieden sein und die gleiche Bedeutung wie R² bzw. R³ haben, wobei R⁵ darüber hinaus auch Si(R¹)(R^{2'})(R^{3'}) bedeuten kann. Dieses oder diese Silazane können gegebenenfalls insbesondere auch in Mischung mit Silazanen vorliegen, in denen R¹ und R⁵ zusammen eine Einfachbindung darstellen.

Beispiele hierfür sind die folgenden Oligomere/Polymere

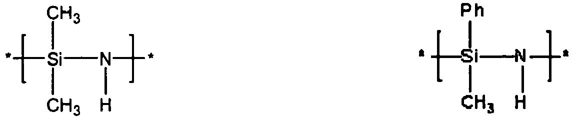

In einer weiteren unabhängigen bevorzugten Ausführungsform ist o in der Formel (I) null, während m und n gleich oder verschieden sind und zwischen 2 und 200-25000 bedeuten. Dabei können die Substituenten R¹ und R⁵ gleich oder verschieden sein und die gleiche Bedeutung wie R² bzw. R³ haben, wobei R⁵ darüber hinaus auch Si(R¹)(R^{2'})(R^{3'}) bedeuten kann. Dieses oder diese Silazane können gegebenenfalls insbesondere auch in Mischung mit Silazanen vorliegen, in denen R¹ und R⁵ zusammen eine Einfachbindung darstellen.

Beispiele sind die folgenden Oligomere/Polymere: 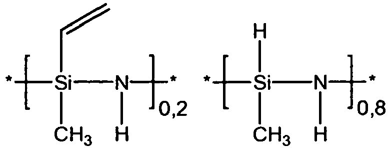 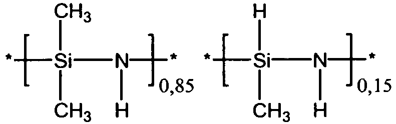 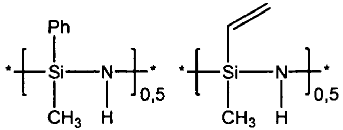 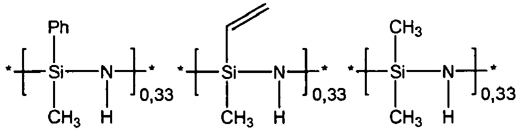 wobei die in eckige Klammern gesetzten Einheiten in den Molekülen randomisiert, ggf. statt dessen blockweise und in anderen Fällen gleichmäßig angeordnet im angegebenen Verhältnis zueinander vorliegen und die Moleküle terminale Wasserstoffatome oder Alkyl- oder Arylgruppen enthalten.

In einer weiteren unabhängigen bevorzugten Ausführungsform sind die Indices n und o gleich null, hat der Index m die Bedeutung 3, und R¹ und R⁵ stellen zusammen eine Einfachbindung dar. Diese Ausführungsform lässt sich allgemein durch die Formel (la) darstellen: 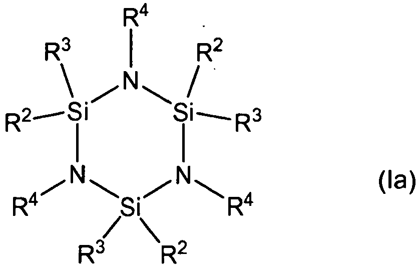 worin R², R³ und R⁴ die für Formel (I) angegebene Bedeutung besitzen.

In einer weiteren unabhängigen bevorzugten Ausführungsform der Formel (I) sind n und o gleich 0, hat m die Bedeutung 2, 3, 4, 5, 6, 7, 8, 9, 10 oder eine darüberliegende Zahl, und R¹ und R⁵ stellen zusammen eine Einfachbindung dar. Diese Verbindungen lassen sich wiederum beispielhaft durch Formeln wie 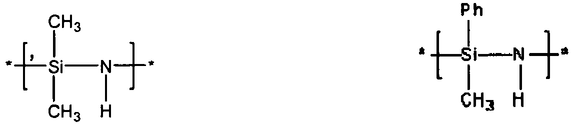 darstellen, wobei die in eckigen Klammern stehende Einheiten n-fach vorhanden sind.

In einer weiteren unabhängigen bevorzugten Ausführungsform der Formeln (I) und (II) bedeuten m und n jeweils 2, 3, 4, 5, 6, 7, 8, 9, 10 oder eine darüberliegende Zahl, und R¹ und R⁵ stellen zusammen eine Einfachbindung dar. Diese Verbindungen lassen sich (hier für o bzw. p gleich 0) wiederum beispielhaft durch Formeln wie 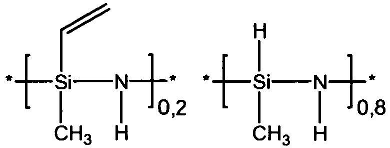 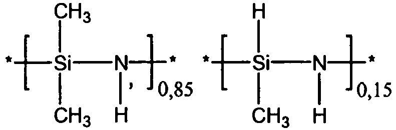 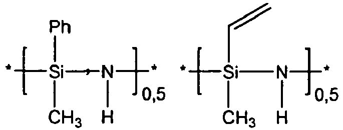 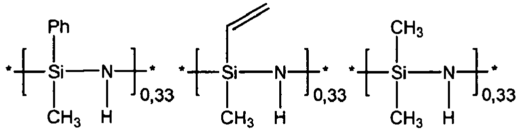 darstellen, wobei wiederum die in eckige Klammern gesetzten Einheiten in den Molekülen randomisiert oder blockweise, in manchen Fällen auch gleichmäßig verteilt, m- bzw. n-fach, bzw. im Fall der zuletzt gezeigten Formel zusammen (m+n)-fach im angegebenen Verhältnis zueinander vorliegen, die Moleküle jedoch in geschlossener Kettenform vorliegen. Diese Variante kann insbesondere im Gemisch mit entsprechenden offenkettigen Silazanen vorliegen und für die vorliegende Erfindung eingesetzt werden.

In einer weiteren unabhängigen bevorzugten Ausführungsform der Formeln (I) oder (II) ist der Index n gleich 0 und sind die Indices m und o bzw. p größer 1 und liegen vorzugsweise zwischen 2 und 200-25000. Ein Beispiel für Formel (I) ist das nachstehende spezifische Silazan:

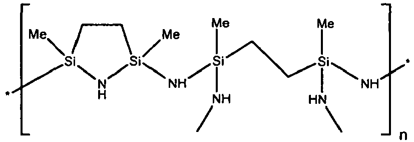

In dieser Ausführungsform ist es besonders bevorzugt, dass die m und o Einheiten gleichmäßig verteilt in gleicher Anzahl vorliegen, d.h. dass immer eine Einheit o auf eine Einheit m folgt. In den Verbindungen der Formel (II) können die m und p Einheiten dagegen vorzugsweise randomisiert oder blockweise angeordnet sein.

In einer weiteren unabhängigen bevorzugten Ausführungsform der Formel (II) hat der Substituent R⁴ in der p-fach vorliegenden Einheit die Bedeutung einer Phenylgruppe.

In einer anderen bevorzugten Ausführungsform der Formel (I) ist o gleich 0, stellen R¹ und R⁵ eine Einfachbindung dar, bedeuten m und n jeweils 2 oder mehr als 2 und bilden alle Reste R³ mit den Resten R^{3'} eine Alkylengruppe. Ein Beispiel für diese Ausführungsform ist das nachstehende Silazan:

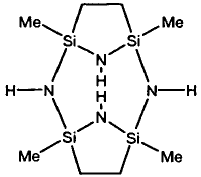

Soweit die voranstehend als bevorzugt genannten Ausführungsformen einander nicht ausschließen, ist es ganz besonders bevorzugt, zwei oder mehrere davon zu kombinieren.

In einer weiteren unabhängigen Ausführungsform wird eine Mischung von mindestens zwei Silazanen oder eine Mischung mindestens eines Silazans mit mindestens einem Silan eingesetzt, um eine zusätzliche Vernetzung der Silazan-Komponente zu erreichen. Dabei sollten die Komponenten einer der folgenden Bedingungen gehorchen:
(a) Ein (erstes) Silazan enthält mindestens eine N-H-Gruppe, das zweite Silazan bzw. das Silan enthält mindestens eine Si-H-Gruppe. Die Bestandteile lassen sich durch Dehydrokupplung (unter Abspaltung von H₂ und Ausbildung einer Si-N(Si)-Si-Gruppe) vernetzen.
(b) Ein (erstes) Silazan enthält mindestens eine Si-Vinylgruppe, das zweite Silazan bzw. das Silan enthält mindestens eine Si-H-Gruppe. Das Hydrosilazan bzw. Hydrosilan greift die C=C-Doppelbindung unter Ausbildung einer Gruppe -Si-C-C-Si- an (Hydrosilylierung).
(c) Ein erstes Silazan mit einer NH-Gruppe wird mit einem zweiten Silazan einer Umaminierung unterworfen. Dabei entstehen ein vernetztes Produkt mit der Gruppierung Si-N(Si)-Si sowie ein Silylamin.

Diese Ausführungsform ist auf alle voranstehenden Silazane anwendbar, sofern sie die genannten Gruppen enthalten. Die genannten Vernetzungsreaktionen werden vorzugsweise vor der Zugabe der CyanatKomponente durchgeführt.

Werden erfindungsgemäß ein oder mehrere Vinylsilazane eingesetzt, so ist es möglich, sie vor Umsetzung mit dem/den Cyanaten einer Additionspolymerisation zu unterwerfen. Alternativ kann die Polymerisation der Doppelbindungen auch nach der Bildung des Hybridpolymeren durchgeführt werden.

Silazane der Formel (I) mit o gleich 0 sind im Handel erhältlich und nach Standardverfahren, insbesondere der Ammonolyse von Monohalogensilanen, beispielsweise wie in US 4,395,460 und der darin zitierten Literatur beschrieben, herstellbar. Dabei entstehen z.B. durch die Umsetzung eines Monohalogensilans mit drei organischen Resten Silazane der Formel (I), worin die Indices n und o null sind, der Index m 1 bedeutet und R⁵ die Bedeutung Si(R¹)(R^{2'})(R^{3'}) besitzt. Die organischen Reste werden bei der Reaktion nicht abgespalten.

Ebenso ist es möglich, analog US 6,329,487 B1 der Kion Corporation Mono-, Di- oder Trisilane in einer Druckapparatur in flüssigem Ammoniak zu ammonolysieren und so Silazane der allegemeinen Formel (I) zu erhalten.

Werden dabei Halogensilane mit mindestens einer Si-H-Bindung allein und/oder in Kombination mit Di- bzw. Trihalogensilanen in einem Überschuss an flüssigem, wasserfreiem Ammoniak umgesetzt und länger in diesem Medium belassen, bilden sich in der durch das entstehende Ammoniumhalogenid-Salz bzw. die entsprechende Säure saurer gewordenen Umgebung im Laufe der Zeit durch Abreaktion von Si-H-Bindungen Polymerisationsprodukte, in denen die Indices m, n und o einen höheren Wert und/oder ein anderes Verhältnis als zuvor aufweisen, möglicherweise katalysiert durch die Anwesenheit von gelöstem und ionisiertem Ammoniumhalogenid.

Ebenso ist in US 6,329,487 B1 beschrieben, dass entsprechende Polymerisationsprodukte durch die Einwirkung von in Ammoniak gelöstem Natrium erhalten werden können.

US 4,621,383 und WO 87/05298 beschreiben weiterhin die Möglichkeit der Synthese von Polysilazanen durch übergangsmetallkatalysierte Reaktionen.

Durch geeignete Wahl der organischen Substituenten am Siliciumatom des Silans bzw. einer Mischung entsprechender Ausgangssilane lassen sich mit diesen Verfahren eine Vielzahl von Silanen der Formel (I) erzeugen, worin der Index o null ist, wobei häufig eine Mischung von linearen und kettenförmigen Polymeren entsteht.

Zum Reaktionsmechanismus siehe auch die Dissertation von Michael Schulz am Forschungszentrum Karlsruhe, Institut für Materialforschung "Mikrostrukturierung präkeramischer Polymere mit Hilfe der UV- und Röntgentiefenlithographie", November 2003, FZKA 6901. Dort wird auch die Herstellung von Silazanen der Formel (I) beschrieben, worin der Index o null ist und die Siliciumatomen in den Blöcken mit den Indices m und n unterschiedliche Substituenten tragen.

Dort wird auch auf die Herstellung von Harnstoffsilazanen verwiesen: Setzt man Silazanen monofunktionelle Isocyanate zu, erfolgt eine Einschubreaktion der NCO-Gruppe in N-H-Bindungen unter Ausbildung einer Harnstoffgruppe [siehe die vorstehend beschriebenen Silazane der Formel (II)]. Im Übrigen wird hinsichtlich der Herstellung von Harnstoffsilazanen und Poly(Harnstoffsilazanen) auf US 6,165,551, US 4,929,704 und US 3,239,489 verwiesen.

Die Herstellung von Verbindungen der Formel (III) (alkoxy-substituierten Silazanen) ist aus US 6,652,978 B2 bekannt. Zur Herstellung dieser Verbindungen können monomere oder oligomere/polymere Silazane der Formel (I), worin o null ist, mit amino- oder hydroxygruppenhaltigen Alkoxysilanen, beispielsweise 3-Aminopropyl-triethoxysilan, umgesetzt werden.

Ein Herstellungsverfahren für Verbindungen der Formel (I) mit o ungleich null wird in der Dissertation von G. Motz (G. Motz, Dissertation, Universität Stuttgart, 1995) konkret am Beispiel der Ammonolyse des 1,2-Bis(dichlormethylsilyl)ethans vorgestellt. Die Herstellung eines speziellen Vertreters dieser Verbindungen, ABSE, wird gemäß S. Kokott und G. Motz, "Modifizierung des ABSE-Polycarbosilazans mit Multi-Walled Carbon Nanotubes zur Herstellung spinnfähiger Massen", Mat.-wiss. u. Werkstofftech. 2007, 38 (11), 894-900, durch Hydrosilylierung und Ammonolyse einer Mischung aus MeHSiCl₂ und MeViSiCl₂ bewirkt.

N-Alkyl-substituierte Silazane wiederum sind in gleicher Weise für den Fachmann ohne weiteres herstellbar, indem die entsprechenden Halogensilane mit Alkylaminen zur Reaktionen gebracht werden, wie z.B. in US 4,935,481 und US 4,595,775 beschrieben.

Die Wahl der als Ausgangsmaterial für das Harz einzusetzenden multifunktionellen Cyanate ist nicht kritisch. Prinzipiell kann jeder mindestens bifunktionelle Cyanatkörper eingesetzt werden, darunter vor allem aromatische Cyanate und unter diesen wiederum insbesondere di- oder polyfunktionelle Cyanate der nachfolgend aufgeführten Strukturen IV-VII: 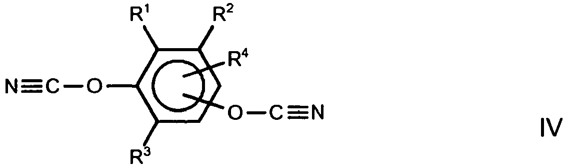 worin R¹ bis R⁴ unabhängig voneinander Wasserstoff, C₁-C₁₀-Alkyl, C₃-C₈-Cycloalkyl, C₁-C₁₀-Alkoxy, Halogen (F, Cl, Br oder I), Phenyl oder Phenoxy ist, wobei die Alkyl-oder Arylgruppen fluoriert oder teilfluoriert sein können. Beispiele sind Phenylen-1,3-dicyanat, Phenylen-1,4-dicyanat, 2,4,5-Trifluorophenylen-1,3-dicyanat; 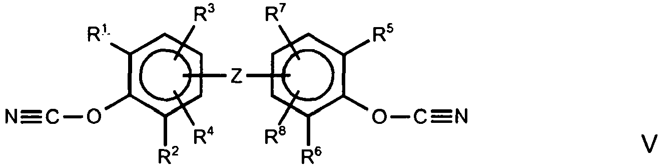 worin R⁵ bis R⁸ wie R¹ bis R⁴ sind und Z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂ oder 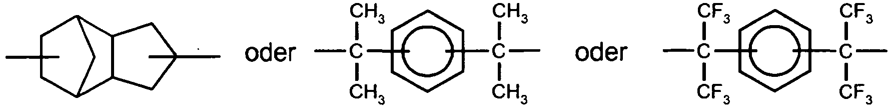 ist; Beispiele sind 2,2-Bis(4-cyanato-phenyl)propan, 2,2-Bis(4-cyanato-phenyl)hexafluoropropan, Biphenylen-4,4'-dicyanat; 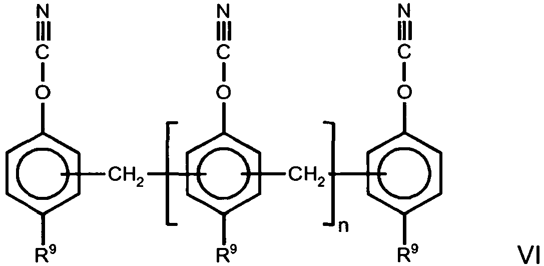 worin R⁹ Wasserstoff oder C₁-C₁₀-Alkyl ist und n eine ganze Zahl von 0 bis 20 bedeutet, sowie
di- oder mehrfunktionelle aliphatische Cyanate mit mindestens einem Fluoratom im aliphatischen Rest und vorzugsweise der Struktur VII:

N=C-O-R¹⁰-O-C=N VII

worin R¹⁰ ein zweibindiger organischer nichtaromatischer Kohlenwasserstoff mit mindestens einem Fluor-Atom und insbesondere mit 3 bis 12 Kohlenstoffatomen ist, dessen Wasserstoffatome vollständig oder teilweise durch weitere Fluor-Atome ersetzt sein können.

Die genannten Cyanate können als Monomere oder als (noch weiter vernetzbare) Prepolymere der genannten Verbindungen, allein oder in Mischungen untereinander oder im Gemisch mit weiteren, z.B. monofunktionellen Cyanaten, eingesetzt werden.

Konkrete Beispiele für einsetzbare Di- oder Oligocyanate sind die folgenden:das Dicyanat von Bisphenol A (4,4'-Dimethylmethylen-diphenyldicyanat; B10), 4,4'-Methylmethylen-diphenyldicyanat (L10), 4,4'Methylidendiphenyldicyanat (M10), Verbindungen mit der Formel VI, worin n 1, 2, 3, 4, 5 oder 6 ist, R⁹ Wasserstoff ist und die Methylengruppe jeweils in ortho-Position zur Cyanatgruppe steht (PT15/PT30).

Als zusätzliche Komponenten bieten sich beispielsweise Epoxide (z.B. Bisepoxide) an.

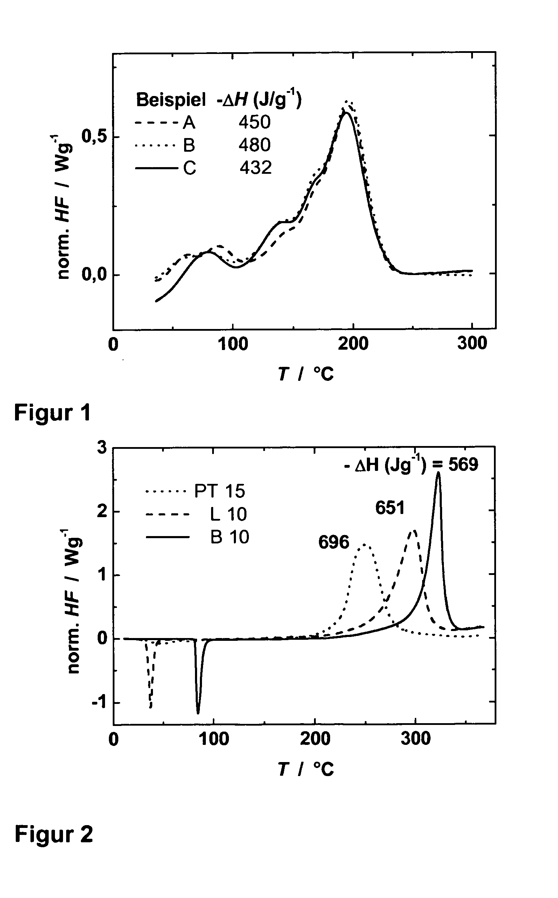

Das Mengenverhältnis von eingesetztem Silazan zu eingesetztem Di- oder Oligocyanat ist prinzipiell nicht kritisch. Allerdings ist es empfehlenswert, das Molverhältnis der Cyanatgruppen in den Di- oder Polycyanaten zu den Si-N-Gruppen in den Silazanen dergestalt zu steuern, dass die molare Menge der Cyanatgruppen im Überschuss, vorzugsweise sogar in mindestens doppelter Menge eingesetzt wird, relativ zur molaren Menge der Si-N-Gruppen in dem oder den Silazanen. Auch gibt es spezifische Kombinationen von Silazanen und Cyanaten, die als unverdünnte Substanzen extrem schnell und dabei möglicherweise unkontrolliert miteinander reagieren. Ist für die Umsetzung solcher Kombinationen die Anwesenheit von Lösungsmittel nicht gewünscht, sollte in günstiger Weise die Gewichtsmenge an Silazan diejenige an Cyanat nicht übersteigen; für manche Kombinationen empfiehlt sich sogar ein Gewichtsverhältnis von Cyanat zu Silazan von mindestens 3:2, vorzugsweise von 4:1 oder sogar 7:1 bis 10:1, insbesondere 8:1 bis 10:1. In molare Mengenverhältnisse übersetzt empfiehlt sich ein Verhältnis von Cyanatgruppen zu Si-N-Gruppen von mindestens ungefähr 70:30 (d.h. z.B. von mindestens 2:1 oder darüber). Der Fachmann kann durch Zusammengeben kleiner Mengen der jeweiligen Komponenten leicht ermitteln, welche Mengenverhältnisse hierbei gegebenenfalls vermieden werden sollten. Alternativen zur Herbeiführung einer kontrollierten Reaktion sind die Umsetzung in starker Verdünnung durch Zugabe eines Lösungsmittels oder der Einsatz von Ausgangsmaterialien mit einer geringeren Anzahl aktiver Gruppen pro Gewichtseinheit (d.h. von oligomeren oder relativ niedrig polymeren Cyanaten und/oder Silazanen). Sofern das obige Problem nicht besteht, empfiehlt es sich für eine Reihe von Anwendungen, die eingesetzten Ausgangsmaterialien für den Prepolymerisationsvorgang in Abwesenheit von Lösungsmittel zu mischen (die meisten Silazane und manche Di- und Oligocyanate sind bei Raumtemperatur flüssig oder lassen sich bei milden Temperaturen aufschmelzen); statt dessen kann die Reaktion jedoch auch in einem geeigneten Lösungsmittel, z.B. Methylethylketon erfolgen. In vielen Fällen erfolgt eine anfängliche Reaktion spontan; gegebenenfalls sollte durch mildes Erwärmen, beispielsweise auf ca. 60-100°C, nachgeholfen werden. Man kann die Reaktion auf Wunsch unter Sauerstoff-Ausschluss durchführen; Diese Maßnahme ist jedoch in der Regel nicht zwingend erforderlich. Eine Entlüftung oder Entgasung der Ansätze ist oft günstig, um möglicherweise entstehende Gase (Ammoniak) zu entziehen. Dabei entsteht innerhalb von meist wenigen Minuten bis wenigen Stunden ein Prepolymer, das bei Temperaturen von etwa 100°C bis 250°C zu einem Duromer nachvernetzt werden kann. Diese Nachhärtung ist von geringerer Exothermie begleitet als die Nachhärtung reiner Cyan(ur)atharze, was die Reaktionsführung erleichtert (siehe Figuren 1 und 2 mit den Beispielen 3a, 3b, 35 und 53 sowie das Vergleichsbeispiel); sie dauert je nach tatsächlich zur Einwirkung gebrachter Temperatur in der Regel ebenfalls wenige Minuten bis mehrere Stunden; als Faustregel lässt sich sagen, dass schneller vorvernetzende Ausgangsmaterialien auch schneller und/oder bei niedrigerer Temperatur nachvernetzt werden können. Da, wie oben erwähnt, Ausgangsmischungen mit Mengenverhältnisse im Bereich von 7:3 bis 10:1 (Cyanat zu Silazan) weniger heftig reagieren als solche mit einem größeren Anteil an Silazan, werden sie nach dieser Faustregel meist bei etwas höheren Temperaturen nachgehärtet als silazanreichere Mischungen. Die erhaltenen Polymere haben Duromer-Eigenschaften.

Mit Hilfe der Mengenverhältnisse lassen sich auch Oberflächeneigenschaften der durchpolymerisierten Form- oder Festkörper steuern: So kann in manchen Fällen ein größerer Anteil an Silazan im zu polymerisierenden Gemisch dafür genutzt werden, klebrige Oberflächen zu erhalten, während das Polymer aus denselben Ausgangskomponenten, jedoch mit einem geringeren Anteil an Silazan, trockene Oberflächen ergeben kann.

Ein relativ geringer Anteil an Silazan im zu polymerisierenden Gemisch ist in der Regel auch günstig, um Polymere mit einer relativ hohen Glasübergangstemperatur bei vergleichsweise hoher Bruchzähigkeit zu erhalten. Hier können Änderungen des Mischungsverhältnisses von z.B. 7:3 auf 8:2 bereits zu einem gravierenden Anstieg von T_{g} führen. Ein anderer Weg, zu relativ hohen Glasübergangstemperaturen zu gelangen, kann durch die Verwendung aromatisch substituierter Silazane eingeschlagen werden.

Selbstverständlich können die Ausgangskomponenten für die erfindungsgemäßen Polymere zusammen mit Füllstoffen der Polymerisation unterworfen werden, wie es für die Herstellung anderer Cyanat-Polymere bekannt ist. Als Füllstoffe können beispielsweise diejenigen dienen, die in EP 1854827 A1 genannt sind.

Die erfindungsgemäßen Polymere eignen sich z.B. für die Herstellung von Prepregs. Hierfür können entsprechende Prepolymere in Lösungsmitteln gelöst als vorvernetzte Tränkharze eingesetzt werden, die unter Druck/höheren Temperaturen zu Duromeren nachvernetzt werden können. Die Tränkharze ihrerseits können durch Auflösen von in Masse hergestellten Prepolymeren oder durch Umsetzung der Ausgangsmaterialien in einem Lösungsmittel hergestellt werden, das vorzugsweise bereits das Lösungsmittel des Tränkharzes ist. Auch können die erfindungsgemäßen Polymere in Form von Formkörpern hergestellt werden, was insbesondere mit lösungsfreien Mischungen der Ausgangsmaterialien gelingt.

Nachstehend soll die Erfindung anhand von Beispielen näher erläutert werden.

Die Bruchzähigkeit wurde unter Einsatz von OCT (Optical Crack Tracing) mit einer Abzugsgeschwindigkeit von 1 mm/min und einer Messpunktrate von 10 Hz bestimmt. Probengeometrie: CT-Körper W=35mm, Dicke 6 mm.

Dynamisch mechanische Analyse (DMA): DMA-Messungen wurden bei einer Frequenz von 1 Hz mit einer Heizrate von 1 K/min durchgeführt.

Der 3-Punkt-Biegetest wurde in Anlehnung an DIN EN ISO 14125 durchgeführt.

Brandversuche wurden unter Verwendung eines Cone Calorimeters mit einem Wärmefluss von 50kW/m² durchgeführt.

Der in den Beispielen zur Angabe des jeweiligen Anteils von Dicyanat zu Silazan verwendete Ausdruck "Äquivalenzverhältnis" bezieht sich auf das molare Verhältnis von Cyanat- zu NH-Gruppen. Ein Äquivalentverhältnis dieser Materialien von 1:1 bedeutet mithin, dass Dicyanat und Silazan in solchen Mengen eingesetzt werden, dass sie gleich viele NCO- und NH-Gruppen aufweisen.

Beispiel 1 - Herstellung eines Polymeren aus 4,4'-Methylmethylen-diphenyldicyanat (L10) und Hexamethylcyclotrisilazan(HMCTS).

4,4'-Methylmethylen-diphenyldicyanat (L10) wurde bei Raumtemperatur (bei der es flüssig ist) ohne Lösungsmittel im Äquivalenzverhältnis von etwa 7:3 mit Hexamethylcyclotrisilazan (HMCTS) gemischt.

Die Mischung wurde in plattenförmige Gießform gegossen und auf 70 °C erwärmt. Nach ca. 2 Stunden wurde die Temperatur auf 200 °C und nach weiteren 2h wiederum auf 250°C erhöht und 1 Stunde bei dieser Temperatur belassen um das entstandene Prepolymer nachzuhärten. Nach insgesamt 6,5 Stunden wurde die Temperatur langsam bis Raumtemperatur abgesenkt. Man erhielt leicht gelblich-bräunliche, transluzente Platten mit trockenen Oberflächen.

Beispiel 2 - Herstellung eines Polymeren aus 4,4'-Methylmethylen-diphenyldicyanat (L10) und Trimethyltrivinylcyclotrisilazan (TMTVCTS).

Das Dicyanat wurde bei Raumtemperatur (bei der es flüssig ist) ohne Lösungsmittel in Äquivalenzverhältnissen zwischen etwa 7:3 und etwa 9:1 mit dem Silazan gemischt.

Bei einem Äquivalenzverhältnis 7:3 wurde auf 70 °C erwärmt, ca. 2 Stunden bei der Temperatur belassen. Anschließend wurde auf 200 °C erhöht und 1 Stunde bei dieser Temperatur belassen. Nach insgesamt 6,5 Stunden wurde die Temperatur langsam bis Raumtemperatur abgesenkt. Man erhielt leicht gelblich-bräunliche, transluzente Platten. Sie hatten eine Glasübergangstemperatur von ca. 80 °C.

Bei einer anderen Härtungsvariante wurden die Mischungen (Äquivalenzverhältnisse von 7:3 bis 9:1) ebenso in plattenförmige Gießformen gegossen und auf 70 °C erwärmt. Nach ca. 2 Stunden wurde die Temperatur auf 200 °C und nach weiteren 2h wiederum auf 250°C erhöht und 1 Stunde bei dieser Temperatur belassen, um das entstandene Prepolymer nachzuhärten. Nach insgesamt 6,5 Stunden wurde die Temperatur langsam bis Raumtemperatur abgesenkt. Man erhielt leicht gelblich-bräunliche, transluzente Platten mit trockenen Oberflächen.

Die Bruchzähigkeiten (K_{1c})und die Glasübergangstemperaturen (T_{g}) für Proben aus den Ausgangsmaterialien (a) 7:3,
(b) 7,5:2,5, (c) 7,8:2,2, (d) 8:2, (e) 8,5:1,5, (f) 9:1 und (g) 9,5:0,5 sowie für Referenz L10 sind in Tabelle 1 angegeben:

**Tabelle 1**

| **Probe** | **K_{1c} [N/mm^{3/2}]** | **T_{g}[°C]** |
|---|---|---|
| a | - | 80 |
| b | 1,34 | 124 |
| C | 0,75 | 190 |
| d | 0,80 | 210 |
| e | 0,62 | 223 |
| f | 0,54 | 243 |
| g | 0,52 | 267 |
| Referenz (L10) | 0,58 | 299 |

Ganz allgemein steigt die Glasübergangstemperatur der erhaltenen Polymere mit steigendem Gehalt an Cyanat.

Die Ergebnisse von Brandversuchen für die einzelnen Äquivalenzverhältnisse (a) 7:3, (b) 7,5:2,5, (c) 7,8:2,2 (d) 8:2, (e) 8,5:1,5, (f) 9:1, (g) 9,5:0,5 in Relation zu ausgehärtetem PT15 (einem käuflichen Oligo(3-methylen-1,5-phenylcyanat) mit relativ geringem Oligomerisierungsgrad) und 4,4'-Methylmethylen-diphenyldicyanat (L10)sind in Tabelle 2 angegeben:

**Tabelle 2**

| Beispiel | TTI [s] | HRRpeak [kW/m²] | MARHE [kW/m²] | THR [MJ/m²] | TSR [m²/m²] | Δm [%] |
|---|---|---|---|---|---|---|
| a | 126 | 155 | 51 | 64 | 336 | 24 |
| b | 116 | 158 | 48 | 63 | 252 | 25 |
| C | 93 | 153 | 37 | 35 | 708 | 29 |
| d | 106 | 119 | 51 | 78 | 528 | 34 |
| e | 97 | 131 | 39 | 64 | 822 | 39 |
| f | 96 | 128 | 77 | 145 | 860 | 47 |
| g | 107 | 155 | 75 | 117 | 721 | 44 |
| PT15 | 91 | 185 | 45 | 56 | 629 | 44 |
| L10 | 99 | 162 | 65 | 142 | 2507 | 60 |

Abkürzungen:
TTI = (Time of ignition; Entzündungszeit)
HRRpeak = Heat Release Rate peak (Maximale Wärmefreisetzungsrate)
MARHE (Maximum average rate of heat emission; Maximale mittlere Wärmeemission
THR = Total heat release (Gesamt-Wärmefreisetzung)
TSR = Total smoke released (Gesamt-Rauchfreisetzung)

Die Feuchtigkeitsaufnahme zweier Stäbe aus L10 und TMTVCTS im Verhältnis von 8:2 und 7:3 wurde durch Lagern in Wasser getestet. Die mittlere Feuchtigkeitsaufnahme nach 7 Tagen lag für den Stab aus den Ausgangsmaterialien im Verhältnis von 8:2 bei etwa 0,85%, für denjenigen aus den Materialien im Verhältnis 7:3 bei unter 0,7%. Nach 28 Tagen lag sie in beiden Fällen bei kaum über 1, stieg also kaum noch an.

### Beispiele 3a und 3b

4,4'-Methylmethylen-diphenyldicyanat (L10) wurde bei Raumtemperatur (bei der es flüssig ist) ohne Lösungsmittel im Äquivalenzverhältnis von 8:2 mit Vinyl-methylpolysilazan (VL100) (Beispiel 3a) bzw. einem cyclischen Silazan, erhalten aus 50 Mol-% Dichlorvinylmethylsilan und 50 Mol-% Dichlordimethylsilan (VML50) (Beispiel 3b) vermischt. Dabei wurden die Gemische jeweils in eine Form gegeben und gemäß Variante 1 (Äquivalenzverhältnis 1:1) von Beispiel 2 bei maximaler Härtungstemperatur 200°C gehärtet. Die Glasübergangstemperatur T_{g} für das fertig ausgehärtete Polymer aus Beispiel 3b wurde mit 185°C bestimmt; diejenige des Beispiels 3a lag geringfügig darüber.

In **Fig. 1** ist die Exothermie der Reaktionen gemäß Beispiel 3a (Kurve A) und 3b (Kurve 3b) gezeigt. Die Integrale für -ΔH (J/g⁻¹) haben einen Wert von 450 bzw. 480.

### Beispiel 4

Beispiel 3 wurde wiederholt, wobei jedoch VML50 durch ein Polyphenylmethylsilazan (PML100) ersetzt wurde. Man erhielt vergleichbare Ergebnisse. Die Glasübergangstemperatur T_{g} für das fertig ausgehärtete Polymer wurde mit 204°C bestimmt.

### Beispiel 5

Beispiel 4 wurde wiederholt, wobei jedoch das Äquivalenzverhältnis Cyanat zu Silazan 7:3 betrug.

### Beispiel 6

Beispiel 3 wurde wiederholt, wobei jedoch VML50 durch ein cyclisches Silazan aus 50 Mol-% Vinylmethylsilylaminogruppen und 50 Mol-% Phenylmethylsilylaminogruppen (PVL50) ersetzt wurde. Die Glasübergangstemperatur T_{g} für das fertig ausgehärtete Polymer wurde mit 190°C bestimmt.

Eine Brennbarkeitsprüfung analog UL94 wurde für die Beispiele 3 bis 6 durchgeführt. Brennendes Abtropfen konnte bei keinem der Probenkörper beobachtet werden. Völliges Abbrennen der Probe wurde ebenfalls in keinem der Fälle beobachtet; die Probenkörper rußten nicht.

Die Ergebnisse der Brandprüfung analog UI94 der Beispiele 3 bis 6 sind in Tabelle 3 gezeigt:

**Tabelle 3**

| Beispiel | Nachbrennen nach 1.Beflammung von 10s | Nachbrennen nach 2. Beflammung von 10s | Klassifizierung nach UL94 |
|---|---|---|---|
| 3 | <1s | <1s | V0 |
| 4 | <1s | 7s | V0 |
| 5 | <1s | <1s | V0 |
| 6 | 1s | 4s | V0 |

### Beispiel 7:

Beispiel 3 wurde wiederholt, jedoch wurde 4,4'-Methylmethylen-diphenyldicyanat (L10) durch 4,4'-Dimethylmethylen-diphenyldicyanat (B10) ersetzt. Die Glasübergangstemperatur wurde mit 215°C bestimmt.

### Beispiel 8:

Beispiel 7 wurde wiederholt, jedoch wurde VML50 durch ein cyclisches Silazan aus 85 Mol-% Dimethylsilylaminogruppen

Und 15 Mol-% Methylsilylaminogruppen (ML85) ersetzt. Die Glasübergangstemperatur wurde mit 217°C bestimmt.

### Beispiel 9:

Besipiel 7 wurde wiederholt, jedoch wurde VML50 durch ein cyclisches Silazan aus 100 Mol-% Dimethylsilylaminogruppen (ML100) ersetzt. Die Glasübergangstemperatur wurde mit 215°C bestimmt.

Eine Brennbarkeitsprüfung analog UL94 wurde für die Beispiele 7 bis 9 durchgeführt. Brennendes Abtropfen konnte bei keinem der Probenkörper beobachtet werden. Völliges Abbrennen der Probe wurde ebenfalls in keinem der Fälle beobachtet; die Probenkörper rußten nicht. Die Ergebnisse der Brandprüfung analog UI94 der Beispiele 7 bis 9 sind in Tabelle 4 gezeigt:

**Tabelle 4**

| Beispiel | Nachbrennen nach 1.Beflammung von 10s | Nachbrennen nach 2. Beflammung von 10s | Klassifi-zierung nach UL94 |
|---|---|---|---|
| 7 | 5s | 25s | V1 |
| 8 | 3s | 20s | V1 |
| 9 | <1s | 19s | V1 |

### Beispiel 10:

Beispiel 9 wurde wiederholt, jedoch wurde 4,4'-Dimethylmethylen-diphenyldicyanat (B10) durch 4,4'Methylidendiphenyldicyanat (M10) ersetzt. Die Glasübergangstemperatur wurde mit 239°C bestimmt.

### Beispiel 11:

Beispiel 4 wurde wiederholt, jedoch 4,4'-Methylmethylen-diphenyldicyanat (L10) durch 4,4'Methylidendiphenyldicyanat (M10) ersetzt. Die Glasübergangstemperatur wurde mit 224°C bestimmt.

### Beispiel 12:

Beispiel 6 wurde wiederholt, jedoch 4,4'-Methylmethylen-diphenyldicyanat (L10) durch 4,4'Methylidendiphenyldicyanat (M10) ersetzt.

### Beispiel 13:

Beispiel 3 wurde wiederholt, jedoch 4,4'-Methylmethylen-diphenyldicyanat (L10) durch 4,4'Methylidendiphenyldicyanat (M10) ersetzt. Die Glasübergangstemperatur wurde mit 238°C bestimmt.

### Beispiel 14:

Beispiel 5 wurde wiederholt, wobei jedoch 4,4'-Methylmethylen-diphenyldicyanat (L10) durch 4,4'Methylidendiphenyldicyanat (M10) ersetzt wurde. Die Glasübergangstemperatur wurde mit 235°C bestimmt.

Eine Brennbarkeitsprüfung analog UL94 wurde für die Beispiele 10 bis 14 durchgeführt. Brennendes Abtropfen konnte bei keinem der Probenkörper beobachtet werden. Völliges Abbrennen der Probe wurde ebenfalls in keinem der Fälle beobachtet; die Probenkörper rußten nicht. Die Ergebnisse der Brandprüfung analog UI94 der Beispiele 10 bis 14 sind in Tabelle 5 gezeigt:

**Tabelle 5**

| Beispiel | Nachbrennen nach 1.Beflammung von 10s | Nachbrennen nach 2. Beflammung von 10s | Klassifizierung nach UL94 |
|---|---|---|---|
| 10 | <1s | 16s | V1 |
| 11 | 2s | 9s | V0-V1 |
| 12 | 1s | 1s | V0 |
| 13 | <1s | 28s | V1 |
| 14 | <1s | 10s | V0-V1 |

### Beispiel 15

4,4'-Methylmethylen-diphenyldicyanat (L10) wurde bei Raumtemperatur (bei der es flüssig ist) ohne Lösungsmittel im Äquivalenzverhältnis von 8:2 mit einem cyclischen Silazan, hergestellt aus 85 Mol-% Dichlordimethylsilan und 15 Mol-% Dichlormethylsilan (ML85), gemischt. Die Mischungen wurden anschließend in plattenförmige Gießformen gegossen, auf 70°C erwärmt und dann bei 200°C gehärtet. Man erhielt leicht gelblich-bräunliche, transluzente Platten.

### Beispiel 16

Beispiel 15 wurde wiederholt, wobei jedoch ML85 durch ein cyclisches Silazan, hergestellt aus 100 Mol-% Dichlordimethylsilan (ML100), ersetzt wurde.

### Beispiel 17

Beispiel 15 wurde wiederholt, wobei jedoch ML85 durch ein cyclisches Silazan, hergestellt aus 50 Mol-% Dichlorvinylmethylsilan und 50 Mol-% DichlorDimethylsilan (VML50), eingesetzt wurde. Man erhielt vergleichbare Ergebnisse.

### Beispiel 18

Beispiel 15 wurde wiederholt, wobei jedoch ML85 durch ein cyclisches Silazan, hergestellt aus 50 Mol-% Dichlormethylvinylsilan und 50 Mol-% Dichlormethylphenylsilan (PVL50), ersetzt wurde.

### Beispiel 19

Beispiel 15 wurde wiederholt, wobei jedoch ML85 durch ein cyclisches Silazan aus 100 Mol-% Phenylmethylsilylaminogruppen (PML100) ersetzt wurde.

Die K_{1c}-Werte und die Glasübergangstemperaturen für die Beispiele 16, 17 und 18 sind in Tabelle 6 aufgeführt.

**Tabelle 6**

| Beispiel | K_{1c} | T_{g} |
|---|---|---|
| | [MN/m^{3/2}] | [°C] |
| 16 | 0,88 | 202 |
| 17 | 0,66 | 202 |
| 18 | 0,90 | 180 |

Die Brandwerte für die Beispiele 15 bis 19 in Relation zu PT15 und L10 (4,4'-Methylmethylen-diphenyldicyanat) sind in Tabelle 7 aufgeführt.

**Tabelle 7**

| Beispiel | TTI | HRRpeak | MARHE | THR | TSR | Δm |
|---|---|---|---|---|---|---|
| | [s] | [kW/m²] | [kW/m²] | [MJ/m²] | [m²/m²] | [%] |
| 15 | 81 | 138 | 55 | 87 | 2054 | 51 |
| 16 | 101 | 150 | 67 | 119 | 2618 | 64 |
| 17 | 97 | 116 | 52 | 51 | 1686 | 42 |
| 18 | 112 | 138 | 54 | 90 | 1381 | 44 |
| 19 | 94 | 151 | 47 | 114 | 1015 | 48 |
| PT15 | 91 | 185 | 45 | 56 | 629 | 44 |
| L10 | 99 | 162 | 65 | 142 | 2507 | 60 |

### Beispiel 20

Beispiel 15 wurde wiederholt, wobei jedoch 4,4'-Methylmethylen-diphenyldicyanat (L10) durch 4'Methylidendiphenyldicyanat (M10) ersetzt wurde.

### Beispiel 21

Beispiel 16 wurde wiederholt, wobei jedoch 4,4'-Methylmethylen-diphenyldicyanat (L10) durch 4,4'Methylidendiphenyldicyanat (M10) ersetzt wurde.

### Beispiel 22

Beispiel 17 wurde wiederholt, wobei jedoch 4,4'-Methylmethylen-diphenyldicyanat (L10) durch 4,4'Methylidendiphenyldicyanat (M10) ersetzt wurde.

### Beispiel 23

Beispiel 18 wurde wiederholt, wobei jedoch 4,4'-Methylmethylen-diphenyldicyanat (L10) durch 4,4'Methylidendiphenyldicyanat (M10) ersetzt wurde.

### Beispiel 24

Beispiel 19 wurde wiederholt, wobei jedoch 4,4'-Methylmethylen-diphenyldicyanat (L10) durch 4,4'Methylidendiphenyldicyanat (M10) ersetzt wurde.

Die K_{1c} -Werte und die Glasübergangstemperaturen für die Beispiele 20 bis 24 sind in Tabelle 8 aufgeführt.

**Tabelle 8**

| Beispiele | K_{1c} [MN/m^{3/2}] | T_{g}[°C] |
|---|---|---|
| 20 | 0,53 | 244 |
| 21 | 0,58 | 239 |
| 22 | 0,80 | 214 |
| 23 | 0,63 | 222 |
| 24 | - | 194 |

Die Brandwerte für die Beispiele 20 bis 24 in Relation zu Referenzproben PT15 und 4,4'Methylidendiphenyldicyanat (M10) sind in Tabelle 9 aufgeführt.

**Tabelle 9**

| Beispiele | TTI [s] | HRRpeak [kW/m²] | MARHE [kW/m²] | THR [MJ/m²] | TSR [m²/m²] | Δm [%] |
|---|---|---|---|---|---|---|
| 20 | 69 | 180 | 69 | 128 | 1302 | 54 |
| 21 | 72 | 205 | 96 | 147 | 2919 | 53 |
| 22 | 98 | 173 | 55 | 93 | 898 | 48 |
| 23 | 74 | 169 | 58 | 84 | 1007 | 40 |
| 24 | 72 | 155 | 53 | 78 | 837 | 41 |
| PT15 | 91 | 185 | 45 | 56 | 629 | 44 |
| M10 | 57 | 286 | 149 | 111 | 3439 | 76 |

### Beispiel 25

Beispiel 21 wurde mehrfach wiederholt, wobei jedoch das Äquivalenzverhältnis Cyanat zu Silazan (ML100) 8:2, 8,5:1,5 und 9:1 betrug.

Die K_{1c} -Werte und die Glasübergangstemperaturen für das Beispiel 25 sind in Tabelle 10 aufgeführt.

**Tabelle 10**

| Beispiele | K_{1c} | T_{g} |
|---|---|---|
| | [MN/m^{3/2}] | [°C] |
| 8:2 | 0,64 | 231 |
| 8,5:1,5 | 0,50 | 254 |
| 9:1 | 0,41 | 240 |

Die Brandwerte für das Beispiel 25 in Relation zu Referenzproben PT15 und 4,4'Methylidendiphenyldicyanat (M10) sind in Tabelle 11 aufgeführt.

**Tabelle 11**

| Beispiele | TTI [s] | HRRpeak [kW/m²] | MARHE [kW/m²] | THR [MJ/m²] | TSR [m²/m²] | Δm [%] |
|---|---|---|---|---|---|---|
| 8:2 | 89 | 169 | 80 | 110 | 2301 | 55 |
| 8,5:1,5 | 66 | 182 | 60 | 90 | 2463 | 58 |
| 9:1 | 65 | 206 | 66 | 106 | 1572 | 58 |
| PT15 | 91 | 185 | 45 | 56 | 629 | 44 |
| M10 | 57 | 286 | 149 | 111 | 3439 | 76 |

### Beispiel 26

Ein methyliertes Silazan aus Phenylmethylsilylmethylaminogruppen (PML100N) wurde im Äquivalenzverhältnis von 8:2 bei Raumtemperatur mit L10, bei ca. 75 °C mit B10 und bei über 100°C mit M10 vermischt.

### Beispiel 27

Ein methyliertes Silazan aus Dimethylsilylmethylaminogruppen (ML100N) wurde im Äquivalenzverhältnis von 8:2 bei ca. 75°C mit B10 vermischt.

### Beispiel 28

Ein Prüfkörper wurde aus 4,4'-Dimethylmethylen-diphenyldicyanat (B10)und ML100N hergestellt. Dabei wurden Cyanat und Silazan im Äquivalenzverhältnis 8:2 bei 75°C vermischt und das Gemisch in eine offene Form gegeben. Die Aushärtung erfolgte bei einer maximalen Härtungstemperatur von 200°C.

### Beispiel 29

Beispiel 28 wurde wiederholt, wobei jedoch 4,4'-Methylmethylen-diphenyldicyanat (B10) durch 4,4'Methylidendiphenyldicyanat (M10) und ML100N durch PL100N ersetzt wurde. Das Vermischen erfolgte bei über 100 °C

### Beispiel 30

4,4'-Dimethylmethylen-diphenyldicyanat-Prepolymer (B10 Prepolymer, 35% Umsatz)wurde im Äquivalenzverhältnis von 8:2 bei ca. 50°C mit einem cyclischen Silazan aus 50 Mol-% Vinylmethylsilylamino- und 50 Mol-% Dimethylsilylaminogruppen (VML50) vermischt.

### Beispiel 31

Beispiel 30 wurde wiederholt, wobei jedoch VML50 durch ein cyclisches Silazan aus 50 Mol-% Vinylmethylsilylamino- und 50 Mol-% Phenylsilylaminogruppen (PVL50) ersetzt wurde.

### Beispiel 32

Beispiel 30 wurde wiederholt, wobei jedoch VML50 durch ein cyclisches Silazan aus 100 Mol-% Phenylmethylsilylaminogruppen (PML100)ersetzt wurde.

### Beispiel 33

Ein Prüfkörper wurde aus 4,4'-Dimethylmethylen-diphenyldicyanat (B10)Prepolymer (35% Umsatz)und VML50 hergestellt. Dabei wurde das Gemisch im Äquivalenzverhältnis 8:2 bei ca. 50 °C vermischt und in eine offene Form gegeben. Die Aushärtung erfolgte zweistufig mit zwei Stunden bei ca. 130°C und ca. 1,5 Stunden bei 200°C. Die Glasübergangstemperatur wurde mit 224°C bestimmt.

### Beispiel 34

Beispiel 33 wurde wiederholt, wobei jedoch VML50 durch PML100 ersetzt wurde. Die Glasübergangstemperatur wurde mit 233°C bestimmt.

### Beispiel 35

Gemische aus L10 und PT15 im Gewichtsverhältnis 1:1 bzw. 1:4 wurden angefertigt und jeweils mit VML50, PVL50 und PML100 im Äquivalenzverhältnis von 8:2 vermischt. Mischbarkeit ist bei ca. 50 °C gegeben. Die Exothermie der Reaktion mit VML50 ist in Fig. 1 gezeigt; das Integral -AH (J/g⁻¹) beträgt 432.

### Beispiel 36

Gemisch aus L10 und PT30 im Gewichtsverhältnis 1:1 wurde angefertigt und jeweils mit VML50, PVL50 und PML100 im Äquivalenzverhältnis von 8:2 vermischt. Mischbarkeit ist bei ca. 60 °C gegeben.

### Beispiel 37

Ein Prüfkörper wurde aus dem Cyanatgemisch L10/PT15 (Gewichtverhältnis 1:4) und VML50 hergestellt. Dabei wurde das Cyanat-Silazan-Gemisch im Äquivalenzverhältnis 8:2 bei ca. 50 °C vermischt und in eine offene Form gegeben. Die Aushärtung erfolgte bei einer maximalen Härtungstemperatur von 200°C. Die Glasübergangstemperatur wurde mit 223°C bestimmt.

### Beispiel 38

Ein Prüfkörper wurde aus dem Cyanatgemisch L10/PT15 (Gewichtverhältnis 1:1) und PML100 hergestellt. Dabei wurde das Cyanat-Silazan-Gemisch im Äquivalenzverhältnis 8:2 bei ca. 60 °C vermischt und in eine Form gegeben. Die Aushärtung erfolgte bei einer maximalen Härtungstemperatur von 200°C. Die Glasübergangstemperatur wurde mit 212°C bestimmt.

### Beispiel 39

Ein zweischichtiges Glaslaminat wurde hergestellt. Dabei wurde Glasgewebe mit dem Gemisch von B10-Prepolymer und ABSE (Äquivalenzverhältnis 7:3) in Toluol imprägniert. Zwei der so gebildeten Prepreg-Schichten, die 5 Tage bei Raumtemperatur gelagert worden waren, wurden bei 200 °C 15 min lang gepresst. Der Harzfluss wurde mit 9% bestimmt.

### Beispiel 40

Beispiel 39 wurde wiederholt wobei jedoch Prepregs 2 Minuten bei 50 °C vorgetrocknet und 1 Stunde bei Raumtemperatur gelagert wurden. Toluol wurde hier durch Methylethylketon (MEK) ersetzt.

Der Harzfluss wurde mit 17% bestimmt.

### Beispiel 41

Ein sechsschichtiges Glaslaminat wurde hergestellt. Dabei wurde Glasgewebe mit einem Gemisch aus L10 und VML50 (Äquivalenzverhältnis 8:2) in Methylethylketon (MEK) imprägniert. Die Prepregs wurden 15 Minuten bei 150 °C vorgetrocknet und 2 Stunden bei 200 °C gepresst (vorgeheizte Presse)

### Beispiel 42

Beispiel 41 wurde wiederholt, wobei jedoch Prepregs zuerst 1 Stunde bei 70 °C, 1 Stunde bei 130 °C und schließlich 1 Stunde bei 200 °C gepresst wurden.

### Beispiel 43

Beispiel 42 wurde wiederholt wobei jedoch Prepregs 20 Minuten bei 150 °C vorgetrocknet wurden.

### Beispiel 44

Ein sechsschichtiges Glaslaminat wurde hergestellt. Dabei wurde Glasgewebe mit einem Gemisch aus L10 und VML50 (Äquivalenzverhältnis 8:2) in MEK imprägniert. Die Prepregs wurden 20 Minuten bei 150 °C vorgetrocknet und 2 Stunden bei 200 °C gepresst. Der Harzgehalt der Prepreg-Lösung lag bei 30-35 Gew.-%

### Beispiel 45

Ein Handlaminat mit alternierendem Aufbau (Glasgewebe-Glasmatte-Glasgewebe) wurde hergestellt. Dabei wurden sieben Glasmateriallagen mit dem Gemisch von L10 und PML100 (Äquivalenzverhältnis 8:2) imprägniert. Die Schichten wurden unter Zuhilfenahme von verschiedenen Entlüftungsrollen miteinander verbunden. Das Laminat wurde dann über mehrere Stunden hinweg unter Einhaltung mehrerer unterschiedlicher Temperaturstufen (Maximaltemperatur bei 150 °C) gelagert. Die Glasübergangstemperatur wurde mit 166°C bestimmt. Die Ergebnisse des Brandversuches sind in Tabelle 12 aufgeführt.

**Tabelle 12**

| Beispiel | TTI [s] | HRRpeak [kW/m²] | MARHE [kW/m²] | THR [MJ/m²] | TSR [m²/m²] | Δm [%] |
|---|---|---|---|---|---|---|
| 45 | 65 | 198 | 102 | 34 | 1300 | 29 |

### Beispiel 46

Ein Handlaminat mit alternierendem Aufbau (Glasgewebe-Glasmatte-Glasgewebe) wurde hergestellt. Dabei wurden sieben Glasmateriallagen mit dem Gemisch von L10 und VML50 (Äquivalenzverhältnis 8:2) imprägniert. Die Schichten wurden unter Zuhilfenahme von verschiedenen Entlüftungsrollen miteinander verbunden. Die Aushärtung erfolgte bei einer maximalen Härtungstemperatur von 200°C.

Die Brandwerte für das Beispiel 46 sind in Tabelle 13 aufgeführt.

**Tabelle 13**

| Beispiel | TTI [s] | HRRpeak [kW/m²] | MARHE [kW/m²] | THR [MJ/m²] | TSR [m²/m²] | Δm [%] |
|---|---|---|---|---|---|---|
| 46 | 65 | 135 | 68 | 43 | 1466 | 25 |

### Beispiel 47

Beispiel 46 wurde wiederholt wobei jedoch ein sechsschichtiges Handlaminat hergestellt wurde. Als Glasmaterial wurde Glasgewebe verwendet. Die Brandwerte für das Beispiel 47 sind in Tabelle 14 aufgeführt.

**Tabelle 14**

| Beispiel | TTI [s] | HRRpeak [kW/m²] | MARHE [kW/m²] | THR [MJ/m²] | TSR [m²/m²] | Δm [%] |
|---|---|---|---|---|---|---|
| 47 | 69 | 168 | 83 | 21 | 863 | 18 |

### Beispiel 48

Ein sechsschichtiges RTM (Resin Transfer Molding) Bauteil wurde hergestellt. L10 und VML50 im Äquivalenzverhältnis 8:2 wurde bei Raumtemperatur vermischt. Mittels Druck-RTM wurde ein sechsschichtiger Glasgewebeaufbau imprägniert und das erhaltene Bauteil bei 200°C gehärtet. Die Glasübergangstemperatur wird mit ca. 214 °C bestimmt.

Die Ergebnisse des Brandversuches sind in Tabelle 15 aufgeführt.

**Tabelle 15**

| Beispiel | TTI [s] | HRRpeak [kW/m²] | MARHE [kW/m²] | THR [MJ/m²] | TSR [m²/m²] | Δm [%] |
|---|---|---|---|---|---|---|
| 48 | 32 | 99 | 31 | 6 | 117 | 25 |

### Beispiel 49

Beispiel 48 wurde wiederholt, wobei statt eines sechsschichtigen Glasgewebeaufbaus ein vierschichtiger Glasgewebeaufbau und Vakuum-RTM verwendet wurde. Die Ergebnisse des Brandversuches sind in Tabelle 16 aufgeführt.

**Tabelle 16**

| Beispiel | TTI [s] | HRRpeak [kW/m²] | MARHE (kW/m²] | THR [MJ/m²] | TSR [m²/m²] | Δm [%] |
|---|---|---|---|---|---|---|
| 49 | 29 | 215 | 66 | 5 | 190 | 19 |

### Beispiel 50

Beispiel 48 wird wiederholt, wobei statt eines sechsschichtigen Glasgewebeaufbaus ein neunschichtiger Glasgewebeaufbau und Vakuum-RTM verwendet wurde. Die Glasübergangstemperatur wird mit ca. 215°C bestimmt. Die Ergebnisse des Brandversuches sind in Tabelle 17 aufgeführt.

**Tabelle 17**

| Beispiel | TTI [s] | HRRpeak [kW/m²] | MARHE [kW/m²] | THR [MJ/m²] | TSR [m²/m²] | Δm [%] |
|---|---|---|---|---|---|---|
| 50 | 75 | 211 | 77 | 25 | 667 | 20 |

Ein Biegetest (3-Punkt-Biegetest) wurde an beiden Materialien durchgeführt. Der Mittelwert wurde für L10-Glasfaser mit 350 Mpa, für L10/VML50-Glasfaser mit 393 Mpa bestimmt.

### Beispiel 51

Bespiel 50 wurde wiederholt, wobei jedoch ein Kohlefasergewebe-Aufbau verwendet wird. Die Glasübergangstemperatur wird mit ca. 205 °C bestimmt. Die Ergebnisse des Brandversuchs sind in Tabelle 18 aufgeführt.

**Tabelle 18**

| Beispiel | TTI [s] | HRRpeak [kW/m²] | MARHE [kW/m²] | THR [MJ/m²] | TSR [m²/m²] | Δm [%] |
|---|---|---|---|---|---|---|
| 51 | 80 | 168 | 72 | 20.8 | 716 | 21 |

Ein Biegetest(3-Punkt-Biegetest) wurde an dem Material durchgeführt. Der Mittelwert wurde für L10/VML50-Kohlefaser mit 803 Mpa bestimmt.

### Beispiel 52

Zwei Glasplatten wurden verklebt. Dabei wurde ein Gemisch aus L10 und VML50 im Äquivalenzverhältnis 8:2 angefertigt und als dünne Schicht zwischen zwei Glasplatten aufgetragen. Die Härtung erfolgte bei einer maximalen Härtungstemperatur von 200°C. Man erhielt eine transparente, flächige Verklebung.

### Beispiel 53

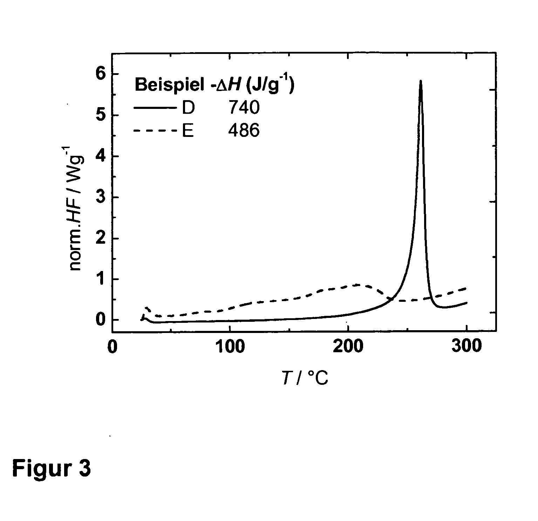

Triglycidyl-para-Aminophenol (TGPAP) und PT15 im Äquivalenzverhältnis von 1:1 wurden mit 10Gew.-% eines vorvernetzten Silazans aus 33 Mol-% Dimethylsilylamino-und 67 Mol-% Methylsilylaminogruppen (ML33 S) vermischt. Die Nachhärtung bei relativ milden Temperaturen zeigte eine Exothermie von -ΔH (J/g-¹) = 486, siehe **Figur 3****.**

### Vergleichsbeispiele

In **Figur 2** ist die Exothermie der Härtung reiner Cyanate gezeigt, nämlich von PT15 (-ΔH (J/g-¹) = 696), von L10 (-ΔH (J/g-¹) = 651) und von B10 (-ΔH (J/g-¹) = 569). Die Härtungsreaktion erfolgt erst bei deutlich höheren Temperaturen als diejenige der vorstehenden Beispiele. In **Figur 3** ist die Exothermie der Härtung eines Gemischs aus TGPAP und PT15 im Äquivalenzverhältnis von 1:1 angegeben. Der Wert lag mit -ΔH (J/g-¹) = 740 wesentlich höher als derjenige, der für Beispiel 53 ermittelt wurde.

## Patentansprüche

1. Hybrid-Prepolymer, erhältlich durch Umsetzung von mindestens
(i) einem oder mehreren difunktionellen, oligofunktionellen und/oder polyfunktionellen Cyanat(en) und/oder von einem oder mehreren Prepolymeren davon und
(ii) einem oder mehreren monomeren, oligomeren und/oder polymeren Silazan(en).

2. Hybrid-Prepolymer nach Anspruch 1, worin das Molverhältnis der in dem/den Cyanat(en) gemäß (i) vorhandenen Cyanatgruppen zu den in dem/den Silazan(en) gemäß (ii) vorhandenen Si-N-Gruppen gleich oder größer 70:30, vorzugsweise gleich oder größer 75:35 und besonders bevorzugt gleich oder größer 80:20 ist.

3. Hybrid-Prepolymer nach Anspruch 1, erhältlich durch Umsetzung von mindestens
(i) einem oder mehreren difunktionellen, oligofunktionellen und/oder polyfunktionellen Cyanat(en) und/oder von einem oder mehreren Prepolymeren davon und
(ii) einem oder mehreren monomeren, oligomeren und/oder polymeren Silazan(en), ausgewählt unter solchen der allgemeinen Formel (I): 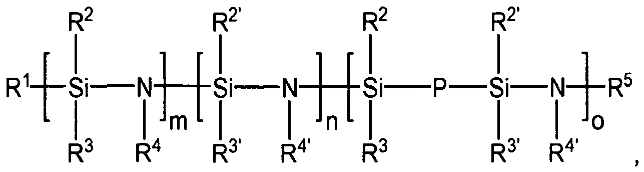 der allgemeinen Formel (II) : 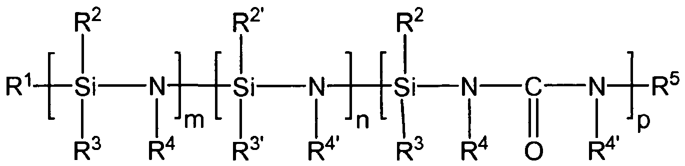 und der allgemeinen Formel (III) : 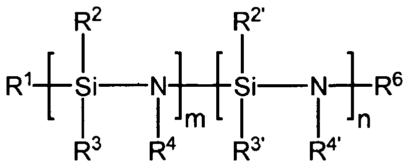 worin
(a) R² und R³ gleich oder verschieden sind und Wasserstoff oder geradkettiges, verzweigtes oder cyclisches, substituiertes oder unsubstituiertes Alkyl, Alkenyl, Aryl, Arylalkyl, Alkylaryl, Alkenylaryl oder Arylalkenyl bedeuten, wobei jeder der Substituenten R² und R³ im Falle von m und/oder o größer 1 in verschiedenen Einheiten eine unterschiedliche oder dieselbe Bedeutung besitzt,
R^{2'} und R^{3'} gleich oder verschieden sind und geradkettiges, verzweigtes oder cyclisches, substituiertes oder unsubstituiertes Alkyl, Alkenyl, Aryl, Arylalkyl, Alkylaryl, Alkenylaryl oder Arylalkenyl bedeuten, wobei jeder der Substituenten R^{2'} und R^{3'} im Falle von n und/oder o größer 1 in verschiedenen Einheiten eine unterschiedliche Bedeutung oder dieselbe Bedeutung besitzt,
oder
(b) sofern mindestens ein Rest R³ und ein Rest R^{3'} vorhanden sind, R² und R^{2'} die voranstehend angegebene Bedeutung besitzen und (i) alle oder (ii) jeweils ein Teil der Reste R³ und R^{3'} zusammen eine unsubstituierte oder substituierte, geradkettige oder verzweigte Alkylengruppe darstellen, wobei in Variante (ii) der restliche Teil der Reste R³ und R^{3'} die unter (a) angegebene Bedeutung besitzt,
und worin
R⁴ und R^{4'} Alkyl, Phenyl oder Wasserstoff bedeuten, wobei mehrere Reste R⁴ und/oder R^{4'} in jeweils einem Molekül der Verbindungen (I) bis (III) gleich oder verschieden sein können,
R¹ und R⁵ gleich oder verschieden sind und die gleiche Bedeutung wie R² bzw. R³ haben können, wobei R⁵ darüber hinaus auch Si(R¹)(R^{2'})(R^{3'}) bedeuten kann oder R¹ und R⁵ zusammen eine Einfachbindung darstellen,
R⁶ Si(R²)(R^{2'})-X-R⁷-Si(R²)_{q}(OR^{2'})_{3-q} bedeutet, worin X entweder O oder NR⁴ bedeutet, R⁷ eine Einfachbindung oder eine substituierte oder unsubstituierte, geradkettige, verzweigte oder cyclische Alkylengruppe darstellt und q 0, 1, 2 oder 3 sein kann,
P eine Alkylengruppe mit 1 bis 12 Kohlenstoffatomen ist,
m und p unabhängig voneinander 1, 2, 3, 4, 5, 6, 7, 8, 9, 10 oder eine ganze Zahl zwischen 11 und 25000 bedeuten, und
n und o unabhängig voneinander 0, 1, 2, 3, 4, 5, 6, 7, 8, 9, 10 oder eine ganze Zahl zwischen 11 und 25000 bedeuten,
wobei die in eckige Klammern gesetzten Einheiten gleichmäßig, randomisiert oder blockweise im jeweiligen Molekül verteilt sein können.

4. Hybrid-Prepolymer nach Anspruch 1 oder 2, erhältlich durch Umsetzung von mindestens
(i) einem oder mehreren Cyanat(en), ausgewählt unter solchen der nachfolgend aufgeführten Strukturen IV-VI: 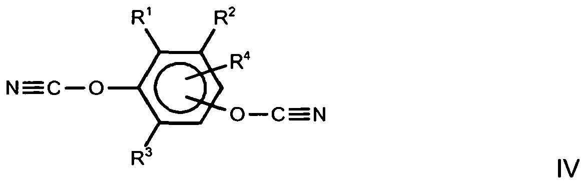 worin R¹ bis R⁴ unabhängig voneinander Wasserstoff, C₁-C₁₀-Alkyl, C₃-C₈-Cycloalkyl, C₁-C₁₀-Alkoxy, Halogen (F, Cl, Br oder I), Phenyl oder Phenoxy ist, wobei die Alkyl- oder Arylgruppen fluoriert oder teilfluoriert sein können, 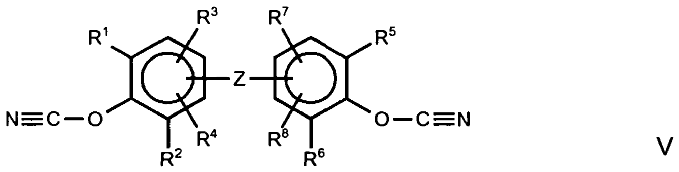 worin R¹ bis R⁸ wie R¹ bis R⁴ für Formel IV definiert sind und Z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂ oder 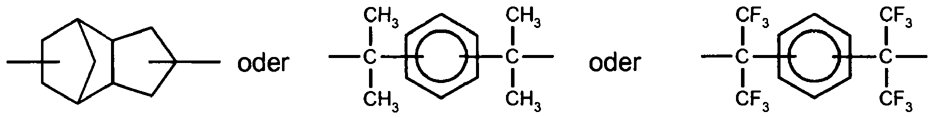 ist, 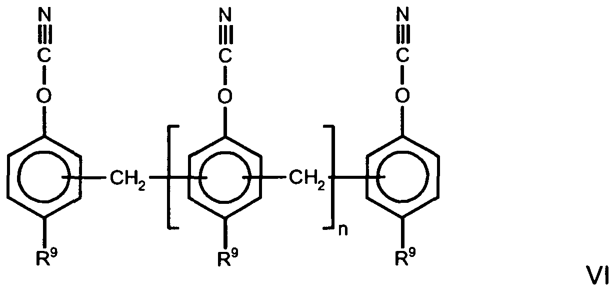 worin R⁹ Wasserstoff oder C₁-C₁₀-Alkyl ist und n eine ganze Zahl von 0 bis 20 bedeutet,
di- oder mehrfunktionelle aliphatischen Cyanaten,
sowie einem oder mehreren Prepolymeren davon,
und
(ii) einem oder mehreren monomeren, oligomeren und/oder polymeren Silazan(en) wie in Anspruch 1 oder 2 definiert.

5. Hybrid-Prepolymer nach Anspruch 3, worin das oder die di- oder mehrfunktionelle(n) aliphatische(n) Cyanat(e) ausgewählt sind unter Cyanaten mit mindestens einem Fluoratom im aliphatischen Rest und/oder der Struktur VII:
N=C-O-R¹⁰-O-C=N VII
worin R¹⁰ ein zweibindiger organischer nichtaromatischer Kohlenwasserstoff mit mindestens einem Fluor-Atom und insbesondere mit 3 bis 12 Kohlenstoffatomen ist, dessen Wasserstoffatome vollständig oder teilweise durch weitere Fluor-Atome ersetzt sein können.

6. Hybrid-Prepolymer nach einem der voranstehenden Ansprüche, erhältlich durch Umsetzung der Komponenten (i) und (ii) sowie
(iii) einer oder mehrerer zusätzlicher Komponenten.

7. Hybrid-Prepolymer nach Anspruch 6, **dadurch gekennzeichnet, dass** die eine oder die mehreren Komponenten ausgewählt ist unter organischen Monocyanaten.

8. Hybrid-Prepolymer nach Anspruch 6 oder 7, **dadurch gekennzeichnet, dass** die eine oder mindestens eine der mehreren Komponenten ausgewählt ist unter Füllstoffen.

9. Hybrid-Prepolymer nach einem der Ansprüche 6 bis 8, **dadurch gekennzeichnet, dass** die eine oder mindestens eine der mehreren Komponenten ausgewählt ist unter Epoxid-Verbindungen sowie deren Prepolymeren, und insbesondere unter bis- oder mehrfunktionellen Epoxid-Verbindungen.

10. Hybrid-Prepolymer nach einem der voranstehenden Ansprüche, **dadurch gekennzeichnet, dass** es formbar und/oder aufschmelzbar ist.

11. Hybrid-Prepolymer nach Anspruch 10, **dadurch gekennzeichnet, dass** es als Tränkung oder Beschichtung eines textilen Flächengebildes vorliegt.

12. Hybrid-Prepolymer nach Anspruch 11, **dadurch gekennzeichnet, dass** das textile Flächengebilde aus Fasern, insbesondere aus Glasfasern, besteht oder diese enthält.

13. Hybrid-Prepolymer nach einem der Ansprüche 1 bis 7 und 9 , **dadurch gekennzeichnet, dass** es in gelöster Form vorliegt.

14. Duromer, erhältlich durch Nachvernetzen eines Hybrid-Prepolymeren nach einem der Ansprüche 1 bis 10.

15. Duromer nach Anspruch 14, **dadurch gekennzeichnet, dass** es in Form einer einseitigen, zweiseitigen oder durchgehenden Beschichtung eines textilen Flächengebildes vorliegt.

16. Duromer nach Anspruch 14, **dadurch gekennzeichnet, dass** es in Form eines dreidimensionalen Körpers vorliegt.

17. Verwendung eines Duromeren nach einem der Ansprüche 15 und 16 als brandgeschütztes Bauteil.

## Claims

1. Hybrid pre-polymer, obtainable through conversion of at least
(i) one or several difunctional, oligofunctional and/or polyfunctional cyanate(s) and/or from one or several pre-polymeres thereof, and
(ii) one or several monomeric, oligomeric and/or polymeric silazane(s).

2. Hybrid pre-polymer according to claim 1, wherein the molar ratio of the cyanate groups present in the cyanate(s) in accordance with (i) to the Si-N groups present in the silazane(s) in accordance with (ii) is equal to or higher than 70:30, preferably equal to or higher than 75:35 and especially preferably equal to or higher than 80:20.

3. Hybrid pre-polymer according to claim 1, obtainable through conversion of at least (i) one or several difunctional, oligofunctional and/or polyfunctional cyanate(s) and/or from one or several pre-polymeres thereof, and
(ii) one or several monomeric, oligomeric and/or polymeric silazane(s), selected from among those having the general formula (I): 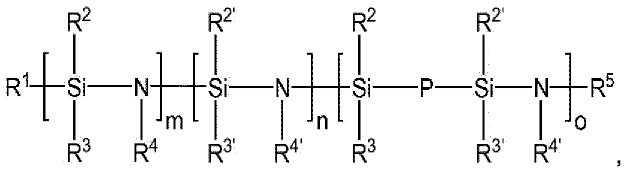 the general formula (II) : 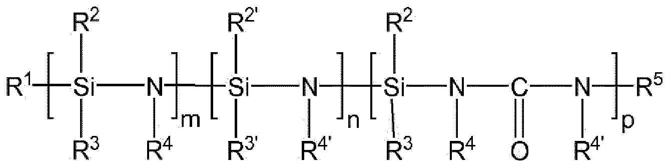 and the general formula (III) : 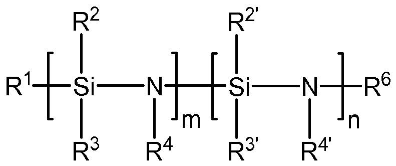 wherein
(a) R² and R³ are equal or different and mean hydrogen or a straight-chain, branched or cyclic, substituted or non-substituted alkyl, alkenyl, aryl, arylalkyl, alkylaryl, alkenylaryl or arylalkenyl, with each of the substituents R² and R³ having a different or the same meaning in different units if m and/or o are greater than 1,
R^{2'} and R^{3'} are the same or different and mean straight-chain, branched or cyclic, substituted or non-substituted alkyl, alkenyl, aryl, arylalkyl, alkylaryl, alkenylaryl or arylalkenyl, with each of the substituents R^{2'} and R^{3'} having a different or the same meaning in different units if n and/or o are greater than 1,
or
(b) provided that at least one radical R³ and one radical R^{3'} are available, R² and R^{2'} have the meaning indicated above and (i) all or (ii) a part of each of the radicals R³ and R^{3'} together represent a non-substituted or substituted, straight-chain or branched alkylene group, wherein in variant (ii) the remaining part of radicals R³ and R^{3'} has the meaning indicated under (a),
and wherein
R⁴ and R^{4'} mean alkyl, phenyl or hydrogen, wherein several radicals R⁴ and/or R^{4'} can be equal or different in one molecule of compounds (I) to (III),
R¹ and R⁵ are equal or different and can have the same meaning as R² or R³, wherein R⁵ can also mean Si(R¹)(R²)(R³), or R¹ and R⁵ together represent a single bond,
R⁶ means Si(R²)(R²)-X-R⁷-Si(R²)q(OR^{2'})_{3-q}, wherein X means either O or NR⁴,
R⁷ represents a single bond or a substituted or non-substituted, straight-chain, branched or cyclic alkylene group and q can be 0, 1, 2 or 3,
P is an alkylene group with 1 to 12 carbon atoms,
m and p mean independently from one another 1, 2, 3, 4, 5, 6, 7, 8, 9, 10 or an integer between 11 and 25000, and n and o mean independently from one another 0, 1, 2, 3, 4, 5, 6, 7, 8, 9, 10 or an integer between 11 and 25000,
with the units placed in square brackets being arranged in the respective molecule in a uniform, randomized or block-wise way.

4. Hybrid pre-polymer according to claim 1 or 2, obtainable through conversion of at least
(i) one or several cyanate(s), selected from among those having the structures IV-VI shown below: 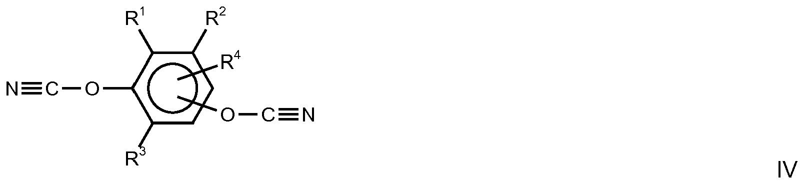 wherein R¹ to R⁴ can be independently from one another hydrogen, C₁-C₁₀-alkyl, C₃-C₈-cycloalkyl, C₁-C₁₀-alkoxy, halogen (F, Cl, Br or I), phenyl or phenoxy, in which case the alkyl or aryl groups can be fluorinated or partially fluorinated, 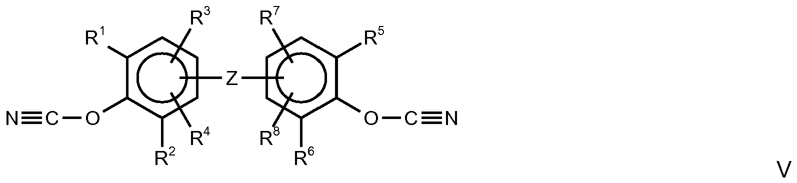 wherein R¹ to R⁸ are defined like R¹ to R⁴ in formula IV and Z is a chemical bond, SO₂, CF₂, CH₂, CHF, CH(CH₃), isopropylene, hexafluoroisopropylene, C₁₋C₁₀₋alkylene, O, NR⁹, N=N, CH=CH, COO, CH=N, CH=N-N=CH, alkyleneoxyalkylene with C₁-C₈-alkylene, S, Si(CH₃)₂ or 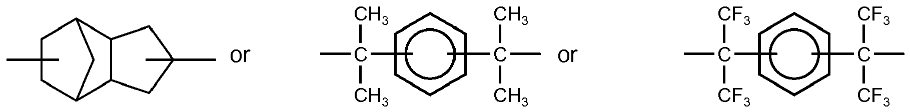 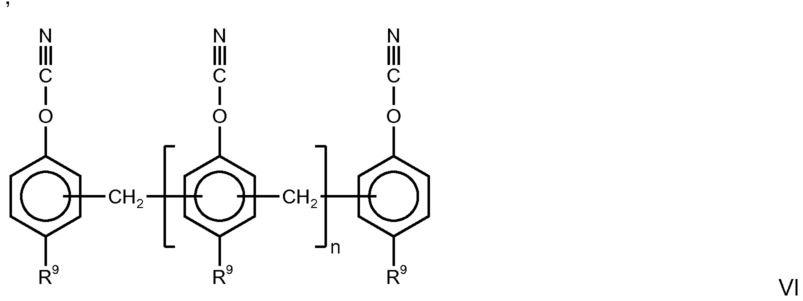 wherein R⁹ is hydrogen or C₁-C₁₀ alkyl and n means an integer from 0 to 20,
di- or polyfunctional aliphatic cyanates,
as well as one or several pre-polymers thereof,
and
(ii) one or several monomeric, oligomeric and/or polymeric silazane(s) as defined in claim 1 or 2.

5. Hybrid pre-polymer according to claim 3, wherein the di- or polyfunctional aliphatic cyanate(s) are selected from among cyanates with at least one fluorine atom in the aliphatic radical and /or the structure VII:
N≡C-O-R¹⁰-O-C≡N VII
wherein R¹⁰ is a divalent organic non-aromatic hydrocarbon with at least one fluorine atom and especially with 3 to 12 carbon atoms, whose hydrogen atoms can be fully or partially substituted by additional fluorine atoms.

6. Hybrid pre-polymer according to one of the previous claims, obtainable by conversion of the components (i) and (ii) as well as (iii) one or several additional components.

7. Hybrid pre-polymer according to claim 6, **characterized in that** the one or the several component(s) is/are selected from organic monocyanates.

8. Hybrid pre-polymer according to claim 6 or 7, **characterized in that** the one or at least one of the several component(s) is selected from fillers.

9. Hybrid pre-polymer according to one of the claims 6 to 8, **characterized in that** the one or at least one of the several component(s) is selected from epoxy compounds and their pre-polymers, and especially from di- or polyfunctional epoxy compounds.

10. Hybrid pre-polymer according to one of the previous claims, **characterized in that** it can be shaped and/or melted.

11. Hybrid pre-polymer according to claim 10, **characterized in that** it is available as impregnation or coating of a textile.

12. Hybrid pre-polymer according to claim 11, **characterized in that** the textile is made from fibers, especially from glass fibers, or contains them.

13. Hybrid pre-polymer according to one of the claims 1 to 7 and 9, **characterized in that** it is present in dissolved form.

14. Duromer, obtainable by post-cross-linking of a hybrid pre-polymer according to one of the claims1 to 10.

15. Duromer according to claim 14, **characterized in that** it is present in the form of a one-sided, two-sided or continuous coating of a textile.

16. Duromer according to claim 14, **characterized in that** it is present in the form of a three-dimensional body.

17. Use of a duromer according to one of the claims 15 and 16 as fire-protected structural part.

## Revendications

1. Prépolymère hybride, produit par la réaction d'au moins
(i) un ou plusieurs cyanate(s) difonctionnel(s), oligofonctionnel(s) et/ou polyfonctionnel(s) et/ou un ou plusieurs de leurs prépolymères, et
(ii) un ou plusieurs monomère(s), oligomère(s) et/ou polymère(s) de silazane(s).

2. Prépolymère hybride selon la revendication 1, dans lequel le rapport molaire des groupes cyanate présents dans le/les cyanate(s) selon (i) aux groupes Si-N présents dans le/les silazane(s) selon (ii) est égal ou supérieur à 70:30, de préférence égal ou supérieur à 75:35, et de préférence encore égal ou supérieur à 80:20.

3. Prépolymère hybride selon la revendication 1, produit par la réaction d'au moins
(i) un ou plusieurs cyanate(s) difonctionnel(s), oligofonctionnel(s) et/ou polyfonctionnel(s) et/ou un ou plusieurs de leurs prépolymères, et
(ii) un ou plusieurs monomère(s), oligomère(s) et/ou polymère(s) de silazane(s), choisi(s) parmi ceux ayant la formule générale (I): 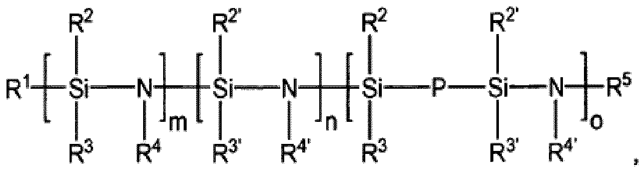 la formule générale (II): 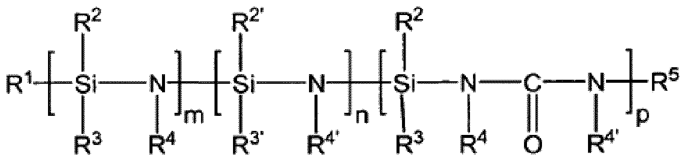 et la formule générale (III): 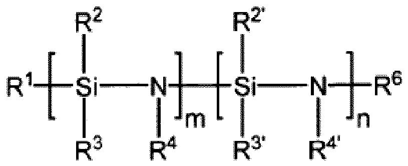 dans lesquelles
(a) R² et R³ sont identiques ou différents et sont un hydrogène ou un alkyle, alcényle, aryle, arylalkyle, alkylaryle, alcénylaryle ou arylalcényle à chaîne droite, ramifié ou cyclique, substitué ou non substitué, dans lequel chacun des substituants R² et R³ possède, dans le cas où m et/ou o est plus grand que 1, une signification différente ou identique en unités différentes,
R^{2'} et R^{3'} sont identiques ou différents et sont un alkyle, alcényle, aryle, arylalkyle, alkylaryle, alcénylaryle ou arylalcényle à chaîne droite, ramifié ou cyclique, substitué ou non substitué, dans lequel chacun des substituants R^{2'} et R^{3'} possède, dans le cas où n et/ou o est plus grand que 1, une signification différente ou identique en unités différentes,
ou
(b) dans la mesure où au moins un radical R³ et un radical R^{3'} sont présents, R² et R^{2'} ont la signification indiquée plus haut et (i) tous ou (ii) chaque fois une partie des radicaux R³ et R^{3'} représentent ensemble un groupe alkylène non substitué ou substitué, à chaîne droite ou ramifié, dans lequel, dans la variante (ii), la partie restante des radicaux R³ et R^{3'} a la signification indiquée sous (a),
et dans lesquelles
R⁴ et R^{4'} sont un alkyle, un phényle ou un hydrogène, où plusieurs radicaux R⁴ et/ou R^{4'} peuvent être identiques ou différents respectivement dans une molécule des composés (I) à (III),
R¹ et R⁵ sont identiques ou différents et peuvent avoir la même signification que R² ou R³, où R⁵ peut en outre signifier Si(R¹)(R^{2'})(R^{3'}) ou R¹ et R⁵ représentent ensemble une liaison simple,
R⁶ signifie Si(R²)(R²)-X-R⁷-Si(R²)_{q}(OR²)_{3-q}, dans laquelle X est soit O soit NR⁴, R⁷ représente une liaison simple ou un groupe alkylène substitué ou non substitué, à chaîne droite, ramifié ou cyclique, et q peut être 0, 1, 2 ou 3,
P est un groupe alkylène avec 1 à 12 atomes de carbone,
m et p sont indépendamment l'un de l'autre 1, 2, 3, 4, 5, 6, 7, 8, 9, 10 ou un nombre entier entre 11 et 25000, et
n et o sont indépendamment l'un de l'autre 0, 1, 2, 3, 4, 5, 6, 7, 8, 9, 10 ou un nombre entier entre 11 et 25000,
dans lequel les unités placées entre crochets peuvent être réparties de manière uniforme, aléatoire ou en blocs dans la molécule respective.

4. Prépolymère hybride selon la revendication 1 ou 2, produit par la réaction d'au moins
(i) un ou plusieurs cyanate(s), choisi(s) parmi ceux qui présentent les structures IV-VI indiquées ci-dessous: 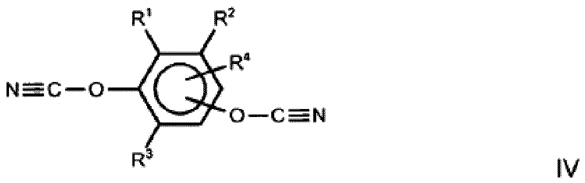 dans laquelle R¹ à R⁴ sont indépendamment l'un de l'autre un hydrogène, alkyle C₁-C₁₀, cycloalkyle C₃-C₈, alcoxy C₁-C₁₀, halogène (F, Cl, Br ou I), phényle ou phénoxy, où les groupes alkyle ou aryle peuvent être fluorés ou partiellement fluorés, 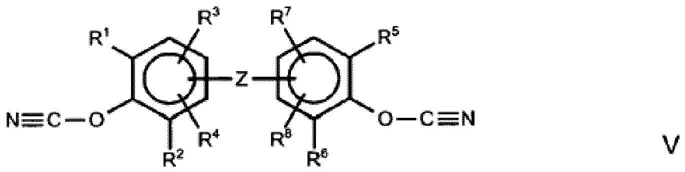 dans laquelle R¹ à R⁸ sont définis comme R¹ à R⁴ pour la formule IV et Z est une liaison chimique, SO₂, CF₂, CH₂, CHF, CH(CH₃), isopropylène, hexafluoroisopropylène, alkylène C₁-C₁₀, O, NR⁹, N=N, CH=CH, COO, CH=N, CH=N-N=CH, alkylèneoxyalkylène avec alkylène C₁-C₈, S, Si(CH₃)₂ ou 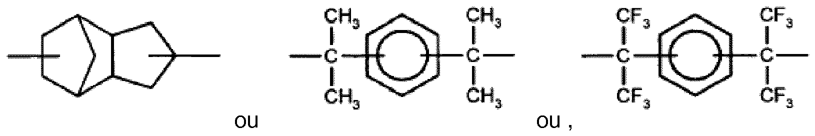 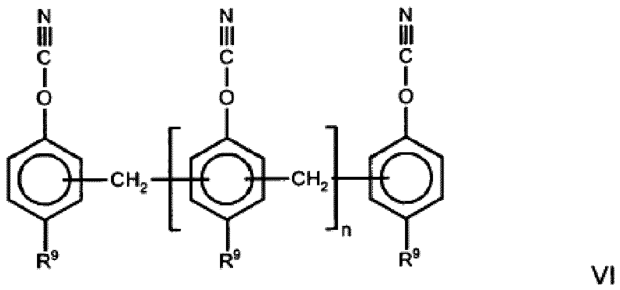 dans laquelle R⁹ est un hydrogène ou un alkyle C₁-C₁₀ et n est un nombre entier de 0 à 20,
des cyanates aliphatiques di- ou polyfonctionnels,
ainsi qu'un ou plusieurs de leurs prépolymères,
et
(ii) un ou plusieurs monomère(s), oligomère(s) et/ou polymère(s) de silazane(s) tels que définis dans la revendication 1 ou 2.

5. Prépolymère hybride selon la revendication 3, dans lequel le ou les cyanate(s) aliphatique(s) di- ou polyfonctionnel(s) est/sont choisi(s) parmi les cyanates comprenant au moins un atome de fluor dans le radical aliphatique et/ou qui présente(nt) la structure VII:
N≡C-O-R¹⁰-O-C≡N VII
dans laquelle R¹⁰ est un hydrocarbure organique non aromatique à liaison double avec au moins un atome de fluor et en particulier avec 3 à 12 atomes de carbone, dont les atomes d'hydrogène peuvent être remplacés en totalité ou en partie par d'autres atomes de fluor.

6. Prépolymère hybride selon l'une quelconque des revendications précédentes, produit par la réaction des composants (i) et (ii) ainsi que de
(iii) un ou plusieurs composants supplémentaires.

7. Prépolymère hybride selon la revendication 6, **caractérisé en ce que** le ou les multiples composant(s) est/sont choisi(s) parmi des monocyanates organiques.

8. Prépolymère hybride selon la revendication 6 ou 7, **caractérisé en ce que** le ou au moins un des multiples composant(s) est choisi parmi des matières de charge.

9. Prépolymère hybride selon l'une quelconque des revendications 6 à 8, **caractérisé en ce que** le ou au moins un des multiples composant(s) est choisi parmi les composés d'époxyde ainsi que leurs prépolymères, et en particulier parmi les composés d'époxyde bis- ou polyfonctionnels.

10. Prépolymère hybride selon l'une quelconque des revendications précédentes, **caractérisé en ce qu'**il peut être moulé et/ou fondu.

11. Prépolymère hybride selon la revendication 10, **caractérisé en ce qu'**il est approprié pour l'imprégnation ou le revêtement d'un produit plat textile.

12. Prépolymère hybride selon la revendication 11, **caractérisé en ce que** le produit plat textile se compose de fibres, en particulier de fibres de verre, ou en contient.

13. Prépolymère hybride selon l'une quelconque des revendications 1 à 7 et 9, **caractérisé en ce qu'**il se trouve sous forme dissoute.

14. Duromère, produit par post-réticulation d'un prépolymère hybride selon l'une quelconque des revendications 1 à 10.

15. Duromère selon la revendication 14, **caractérisé en ce qu'**il se trouve sous la forme d'un revêtement sur une face, sur deux faces ou continu d'un produit plat textile.

16. Duromère selon la revendication 14, **caractérisé en ce qu'**il se trouve sous la forme d'un corps tridimensionnel.

17. Utilisation d'un duromère selon l'une des revendications 15 et 16 comme article protégé contre l'incendie.
